(19) Europäisches Patentamt / European Patent Office / Office européen des brevets

(11) **EP 2 828 564 B1**

(12) **EUROPEAN PATENT SPECIFICATION**

(45) Date of publication and mention
of the grant of the patent:
**29.04.2020  Bulletin 2020/18**

(21) Application number: **13765137.8**

(22) Date of filing: **18.03.2013**

(51) Int Cl.:
*E03B 9/02* *(2006.01)*    *F16K 24/06* *(2006.01)*
*E03C 1/10* *(2006.01)*    *F16K 11/20* *(2006.01)*
*F16K 11/22* *(2006.01)*

(86) International application number:
**PCT/SE2013/050293**

(87) International publication number:
**WO 2013/141795 (26.09.2013 Gazette 2013/39)**

(54) **Manually operable tab valve device**

Manuel betätigbares Auslassventil

Robinet à commande manuelle

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **19.03.2012  SE 1200173**

(43) Date of publication of application:
**28.01.2015  Bulletin 2015/05**

(73) Proprietor: **AB DURGO
S-169 03 Solna (SE)**

(72) Inventor: **HANSSON, Hans
S-177 61 Solna (SE)**

(74) Representative: **Zacco Sweden AB
P.O. Box 5581
114 85 Stockholm (SE)**

(56) References cited:
| | |
|---|---|
| EP-A1- 1 375 988 | AU-B2- 532 906 |
| DE-U1-202010 014 936 | GB-A- 1 602 193 |
| GB-A- 2 181 819 | US-A- 2 310 586 |
| US-A- 4 420 010 | US-A- 5 012 833 |
| US-A- 5 129 416 | US-A- 5 363 875 |
| US-A1- 2009 288 722 | US-B1- 6 386 223 |

## Description

### Technical Field of the Invention

The present invention relates to a manually operable tap valve device.

### Description of Related Art

In many instances of modern society, fluids are transported or handled via a fluid supply system, which may include a fluid distribution piping system and/or a network of pipes. The fluid may be caused to flow by means of a network fluid pressure provided in the distribution piping system. This is the case in various industries where fluids may be handled by pipes, as well as in towns and cities where potable water may be distributed via a tap water network.

In this connection, the fluid to be handled may be a fluid that has to maintain a prescribed standard of purity. Thus, it is often of utmost importance that the fluid in the pipes is kept uncontaminated.

Sometimes an outflow conduit or delivery pipe, connected to the distribution piping system, is in contact with an external fluid that may be dirty, poisonous or otherwise contaminated. Should the pressure within the distribution piping system fall, there is a risk of an amount of external fluid flowing back into the distribution piping system through the delivery pipe. This could, in turn, lead to contamination of fluid in the distribution piping system, and the contaminated fluid could then be distributed via the distribution piping system, when the network fluid pressure is re-established.

Hence, if the fluid in the fluid distribution piping system is to be kept uncontaminated, it is imperative that such external, possibly contaminated, fluid is prevented from flowing into the fluid distribution piping system.

For this purpose, it is known to provide an anti-siphoning valve arrangement for the purpose of preventing such contaminated liquid from flowing into the distribution piping system if the fluid pressure suddenly drops in the distribution piping system. Such drops in fluid pressure in the distribution piping system may occur for a number of reasons during operation of the distribution piping system. The decreased fluid pressure in the distribution piping system may, for example, be caused by damage to a major supply pipe which causes a large fluid leak. When the distribution piping system is embodied as a tap water network, for instance, such a decreased fluid pressure may also result from a fire engine suddenly taking/drawing a large volume of water from the tap water network.

GB 1 602 193 discloses a manually operable garden water tap comprising a housing having an internal passageway there-through between an inlet and an outlet, an anti-syphon valve and a manually-operated valve. Other manually operable tap valve devices are disclosed in US5129416, US5012833, US6386223 and DE202010014936U, whereby a through-flow anti-siphoning valve arrangement is disclosed e.g. in EP1375988.

### Summary

For the purpose of this document, the term "valve" means any device that shuts off, starts, regulates, or controls the flow of a fluid.

It is an object of the present invention to address the problem of enabling the provision of a cost-effective tap valve having an improved anti-siphoning function. This problem is addressed by a manually operable tap valve device according to independent claim 1.

It is also an object of the present invention to address the problem of achieving an improved through-flow anti-siphoning valve in said manually operable tap valve device. According to an embodiment of the manually operable tap valve device the housing body comprises a first ridge member which is provided in the first channel positioned so as to face the first valve member surface; and wherein

the first ridge member protrudes from the inner surface of the first channel so that it co-operates with the movable valve member to form at least one cavity between the first valve member surface and the inner surface of the first channel when the valve unit is in its second state so that the valve member rests against the first ridge member.

According to an embodiment of the manually operable tap valve device the first ridge member is shaped and dimensioned to stretch across the breadth of the channel, and such that the first ridge member co-operates with the movable valve member to form a first cavity facing the input side of the housing; wherein an input side portion of the first valve member surface faces the first cavity; said input side portion having an input surface area.

According to an embodiment of the manually operable tap valve device the first ridge member is shaped and dimensioned such that the first ridge member co-operates with the movable valve member to form a second cavity facing the output side of the valve housing; wherein an output side portion of the first valve member surface faces the second cavity; said output side portion having an output surface area.

According to an embodiment of the manually operable tap valve device said input surface area is larger than said output surface area.

According to an embodiment of the manually operable tap valve device the first ridge member is positioned at a predetermined distance off-centre in relation to the valve member such that said input side portion is larger than said output side portion.

According to an embodiment of the manually operable tap valve device the housing body comprises an upper ridge member which co-operates with the movable valve member to separate the first cavity of the first input from the second cavity of the output side when the second fluid pressure becomes lower than the first ambient pressure level.

According to an embodiment of the manually operable tap valve device said another valve seat and said first ridge member are formed by a single undivided entity; and/or said another valve seat and said first input are formed by a single undivided entity. This advantageously allows for simplified production of a semi-manufactured valve unit which may provide functionality for anti-siphoning, and/or tap valve functionality and/or check valve functionality.

According to an embodiment of the manually operable tap valve device said another valve seat of the anti-siphoning valve output constitutes the first part of the valve unit to which said output is attachable such that the through-flow anti-siphoning valve is a semi-manufactured valve unit. In effect, such a semi-manufactured valve unit advantageously allows for simplified production of a fluid delivery output unit by attaching a valve unit part to the semi-manufactured valve unit.

According to an embodiment of the manually operable tap valve device said anti-siphoning valve output for attachment to a valve unit is adapted for functional interaction with said second part.

According to an embodiment of the manually operable tap valve device said another valve seat, in operation, is a valve seat for a check valve, when the second movable valve member is spring biased towards the another valve seat such that the fluid supply pressure level acting on a surface of the second movable valve member facing said outlet orifice generates a third force so as to urge the second movable valve member away from the another valve seat so as to cause the second movable valve member to move away from the another valve seat when said third force is greater than the biasing force of said spring.

According to an embodiment of the manually operable tap valve device, the anti-siphoning valve output further comprises: a cylindrical threaded outlet portion enclosing said another valve seat so as to enable attachment of the through-flow anti-siphoning valve to the tap valve unit by means of the threaded outlet portion.

According to an embodiment of the manually operable tap valve device said another valve seat, in operation, is a valve seat for a tap valve, when the second movable valve member is biased towards the another valve seat by a control rod so as to enable control of the flow of said first fluid through said outlet orifice by operation of the control rod.

An embodiment relates to a tap water system for supplying water of potable quality, the tap water system comprising:

a water supply pipe provided in a building; and
a manually operable tap valve device according to any of the above described embodiments, connected to said water supply pipe.

**Brief Description of the Drawings**

For simple understanding of the present invention, it will be described by means of examples and with reference to the accompanying drawings, of which:

**Figure 1** illustrates a fluid distribution system comprising a fluid distribution piping system.

**Figures 2A, 2B and 2C** are sectional side views of a manually operable tap valve device.

**Figures 2AA, 2BB and 2CC** are sectional side views of a part of the device of Figures 2A, 2B and 2C.

**Figure 3A** is a sectional side view of an anti-siphoning valve arrangement.

**Figure 3B** is a sectional side view of another anti-siphoning valve arrangement.

**Figures 4A and 4B** are sectional perspective side views of an alternative of a central part of the valve device shown between lines X1 and X2 in Figure 3A and /or Figure 3B.

**Figure 4C** is a sectioned side view of the central part 200 of the valve housing 100 of Figure 4B.

**Figure 4D** is a cross-sectional view taken along line C-C of FIG 4C.

**Figure 4E** is a sectioned side view of the central part 200 of the valve housing 100 of Figure 4A, illustrating the valve arrangement 70 in the closed state.

**Figure 4F** is a cross-sectional view taken along line D-D of FIG 4E.

**Figures 5A and 5B** are sectional perspective side views of another alternative of the central part 200 of the valve arrangement 70.

**Figure 5C** is a sectioned side view of the central part 200 of the valve housing 100 of Figure 5B, illustrating the valve unit in the open state.

**Figure 5D** is a cross-sectional view taken along line A-A of FIG 5C.

**Figure 5E** is a sectioned side view of the central part 200 of the valve housing 100 of Figure 5A, illustrating the valve arrangement 70 in the closed state.

**Figure 5F** is a cross-sectional view taken along line B-B of FIG 5E.

**Figures 6A and 6B** are sectional perspective side views of yet another alternative of the central part 200 of the valve arrangement 70.

**Figure 6C** is a sectioned side view of the central part 200 of the valve housing 100 of Figure 6B, illustrating the valve unit in the open state.

**Figure 6D** is a cross-sectional view taken along line C-C of FIG 6C.

**Figures 7A and 7B** are sectional perspective side views of yet another alternative of the central part 200 of the valve arrangement 70.

**Figure 7C** is a sectioned side view of the central part 200 of the valve housing 100 of Figure 6B, illustrating the valve unit in the open state.

**Figure 7D** is a cross-sectional view taken along line A-A of FIG 7C.

**Figure 7E** is a sectioned side view of the central part 200 of the valve housing 100 of Figure 7A, illustrating the valve arrangement 70 in the closed state.

**Figure 7F** is a cross-sectional view taken along line B-B of FIG 7E.

**Figure 8A** is a sectioned side view of the central part 200 of the valve housing 100, illustrating the valve unit in the open state.

**Figure 8B** is a partially sectioned view taken along line A-A of FIG 8A.

**Figure 8C** is a sectioned side view of the central part 200 of the valve housing 100, **illustrating** the valve arrangement 70 in the closed state.

**Figure 8D** is a partially sectioned view taken along line C-C of FIG 8C.

**Figures 9A and 9B** are sectional perspective side views of yet another alternative of the central part 200 of the valve arrangement 70.

**Figure 9C** is a sectioned side view of the central part 200 of the valve housing 100 of Figure 9B, illustrating the valve unit in the open state.

**Figure 9D** is a cross-sectional view taken along line C1-C2 of FIG 9C.

**Figure 9E** is a sectioned side view of the central part 200 of the valve housing 100 of Figure 9A, illustrating the valve arrangement 70 in the closed state.

**Figure 9F** is a cross-sectional view taken along line D-D of FIG 9E.

**Figures 10A and 10B** are sectional perspective side views of yet another alternative of the central part 200 of the valve arrangement 70.

**Figure 10C** is a sectioned side view of the central part 200 of the valve housing 100 of Figure 10B, illustrating the valve unit in the open state.

**Figure 10D** is a cross-sectional view taken along line A-A of FIG 10C.

**Figure 10E** is a sectioned side view of the central part 200 of the valve housing 100 of Figure 10A, illustrating the valve arrangement 70 in the closed state.

**Figure 10F** is a cross-sectional view taken along line B-B of FIG 10E.

**Figure 11A** shows the valve housing 200 seen from below.

**Figure 11B** shows the valve housing seen from the input side.

**Figure 11C** shows the valve housing seen from the output side.

**Figure 12** illustrates the anti-siphoning inlet area F.

**Figure 13A** shows the limiting area G2.

**Figure 13B** shows the limiting area G1.

**Figure 13C** shows as sectional perspective side view of the valve arrangement. The figure illustrates the areas G1, G2 and F.

**Figure 14** shows the principles of a valve plate with the central shaft pointing upwards.

**Figure 15** shows the principles of a valve plate without any central shaft.

**Figure 16** shows the valve housing seen from below.

**Figure 17** shows a cross-sectional view of an alternative with the bore extending upwards.

## Detailed Description

In the following description similar features in different alternatives will be indicated by the same reference numerals.

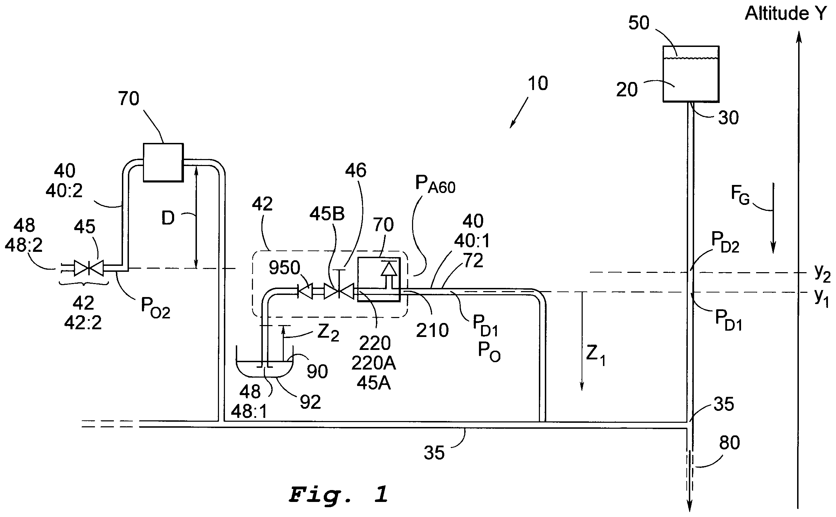

**Figure 1** illustrates a fluid distribution system 10. The fluid distribution system 10 of figure 1 includes a fluid source tank 20 having an output 30 for delivery of a first fluid to a fluid distribution piping system 35. The fluid distribution piping system is arranged so that fluid can be provided with a certain fluid pressure level Po at one or plural fluid outfeed conduits 40. An outfeed conduit 40 may be connected to an associated fluid delivery output unit 42. The fluid delivery output unit 42 may include a valve 45 that can be operated to an open state, by means of a handle 46, for the purpose of letting first fluid flow out of an associated output opening 48. The valve 45 can also be operated to a closed state, by means of the handle 46, such that fluid is prevented from flowing out of the associated output opening 48.

The fluid distribution system 10 may be designed so that the fluid pressure level Po at a fluid delivery output unit 42 has a minimum pressure level $P_{OM}$ under normal conditions.

In one version, the fluid source tank 20 is pressurized such that a suitable fluid pressure is achieved at the output 30 of the fluid source tank 20. This may be achieved by means of a fluid pressurizing pump (not shown). In this manner the fluid source tank 20 may be pressurized so that the fluid pressure level $P_O$ at a fluid delivery output unit 42 has a minimum pressure level $P_{OM}$ under normal conditions.

In another version, the fluid pressure is achieved by means of gravitation and a difference in altitude over the sea level between a fluid level 50 in the fluid source tank 20 and the altitude of the fluid delivery output unit 42. Hence, a gravitational force may act, in the direction of arrow $F_G$ in Figure 1, on the fluid in the fluid distribution piping system 35 so that the fluid pressure level $P_O$ at a fluid delivery output unit 42 has a minimum pressure level $P_{OM}$ under normal conditions.

The fluid distribution piping system 35 may have a pipe 72 for connection to the valve arrangement 70.

The fluid delivery output unit 42 functions to enable delivery of first fluid via the final outlet 48:1 (See Fig1) while simultaneously providing a very efficient reflux prevention function so as to prevent reflux of first fluid from the output opening 48 to the fluid distribution piping system 35.

The fluid distribution system 10 is arranged to provide a certain fluid pressure to the fluid distribution piping system 35. With reference to Figure 1, the received fluid pressure $P_{35:1}$ in piping system 35 at altitude y1 will be equal to the delivered fluid pressure $P_{D1}$ at the same altitude y1, under normal conditions when the fluid is not flowing. Whereas the flow of the fluid affects these pressure levels, the received fluid pressure $P_{35:1}$ in piping system 35 at altitude y1 will be dependent on the delivered fluid pressure $P_{D1}$ at the same altitude y1, under normal conditions also when the fluid is flowing. Moreover, the pressure level $P_{O:1}$, in outfeed conduit 40:1 at the same altitude y1, will be substantially equal to the received fluid pressure $P_{35:1}$ in piping system 35 at altitude y1, under normal conditions, when valve 42:1 is closed. Opening valve 42:1 will, under normal conditions, lead to pressure level $P_{O:1}$, in outfeed conduit 40:1 becoming lower than the fluid pressure level $P_{35:1}$ in piping system 35 at altitude y1, and thus the fluid will flow out of the associated output opening 48:1 since the higher pressure P35:1 will force fluid towards the lower pressure $P_{O:1}$ in outfeed conduit 40:1. This assumes, of course, that the atmospheric pressure $P_{Ay1}$ of the environment surrounding output opening 48:1 is lower than the fluid pressure level $P_{O:1}$, in outfeed conduit 40:1.

The pressure level $P_{35:1}$ of the fluid can suddenly decrease. The decreased pressure level $P_{35:1}$ may be caused e.g. by a sudden large outflow of fluid at point 80 in the fluid distribution piping system 35. The large outflow of fluid at point 80 may, for example, be caused by damage to the supply pipe at point 80 causing a large fluid leak. When the distribution piping system is embodied as a tap water network, for instance, such a decreased fluid pressure may result from a fire engine suddenly taking/drawing a large volume of water from the tap water network at point 80, or at a position downstream from point 80. When the output opening 48:1 is associated with a tap at one of the highest floors of a high rise building, such as a so called "sky scraper", the decreased fluid pressure may result when many taps are opened at the same time at lower floors of that building.

Output opening 48:1 may at this point of time be submerged under the fluid surface 90 of a fluid reservoir 92. When the fluid distribution system 10 is a tap water network 10, the fluid reservoir 92 may be a bath tub 92 filled with dirty water. If the tap 45:B is in an open state and the fluid pressure level $P_{35:1}$ in the fluid distribution piping system 35 drops below the pressure level $P_{48:1}$ in the fluid at output opening 48:1, then the siphon effect would tend to siphon water back out of the reservoir 92 and into the fluid distribution piping system 35, if no appropriate anti-siphoning valve arrangement 70 were included in the piping section 60. Hence, the provision of an anti-siphoning valve arrangement 70 may avoid contamination of the fluid in the pipes 35 of fluid distribution piping system 35. Another example of a risky setup includes a garden hose connected to tap valve 45. If the garden hose, for example, is left on the ground in a garden with the tap valve 45 in an open state, a water puddle may result, and in case of a sudden decrease of the fluid pressure in the piping system 35, then the siphon effect would tend to siphon water from that puddle and into the fluid distribution piping system 35, if no appropriate anti-siphoning valve arrangement 70 were included in the piping section 60.

An anti-siphoning valve arrangement

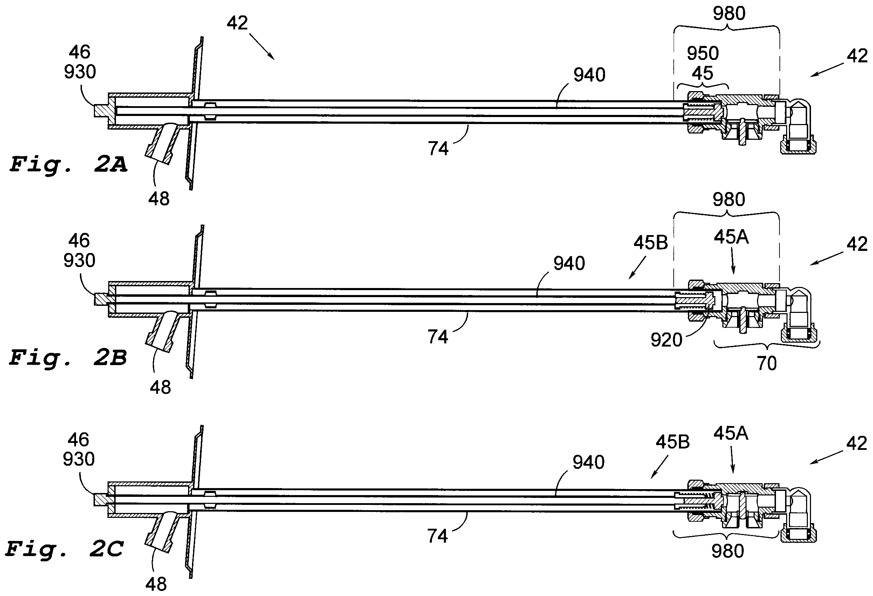

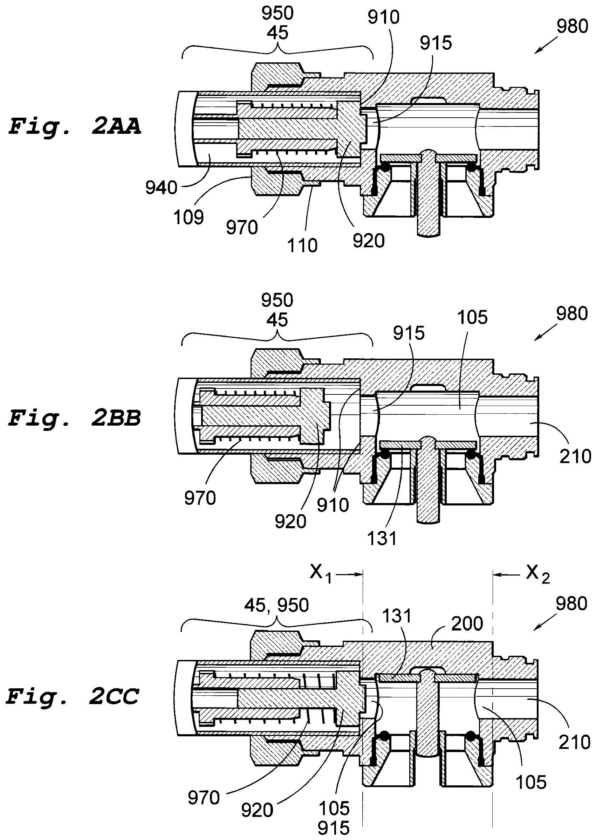

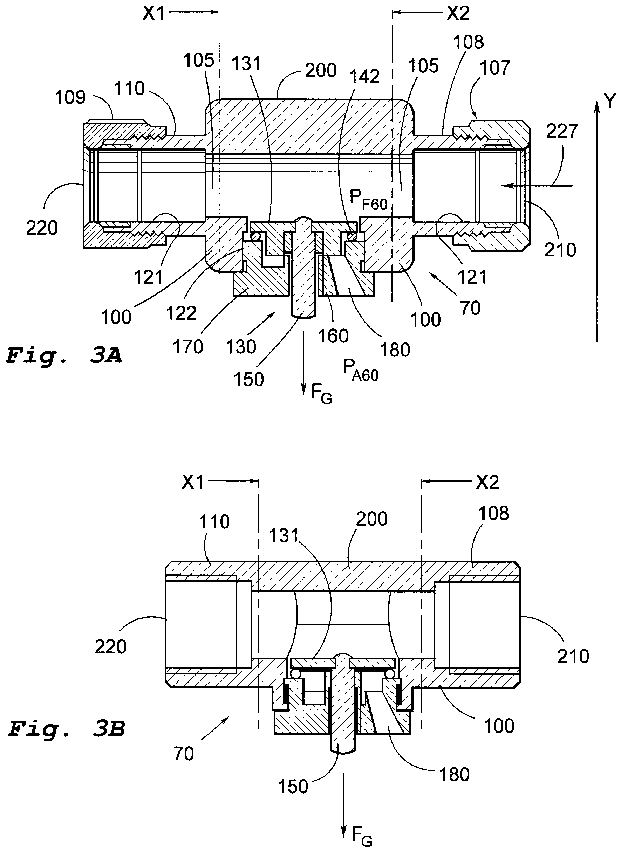

**Figures 3A and 3B** are sectional side views of alternatives of an anti-siphoning valve arrangement 70. Figure 3 shows an elongate tubular valve housing 100 that includes a throughflow channel 105. The valve housing 100 of the valve arrangement 70 has an input 210, at a first end 108 of the housing 100, for connection to the pipe 72 of the fluid supply piping system 35. The valve housing 100 of the valve arrangement 70 also has an output 220, at a second end 110 of the housing 100, for attachment to a valve unit part 45B (See Fig 1 and Fig 3A or 3B in conjunction with Fig 2).

According to an alternative the output 220A further comprises a cylindrical threaded outlet portion 110. As described in connection with Fig 2, the threaded outlet portion 110 may enclose a valve seat 910 so as to enable attachment of the anti-siphoning valve arrangement (70) to a semi-manufactured tap valve unit 45B by means of the threaded outlet portion 110. According to an alternative, there is provided a first pipe connector 107 at the first end 108 of the housing 100, and a second pipe connector 109 are provided at the second end 110 of the housing 100 (See Fig 3A). The inside surface of the ends 108, 110 of the housing 100 may accordingly include recessed portions 121 for receiving the respective ends of the pipes 72 and 74 (See Figs 1 and 2). The illustrated pipe connectors 107 and 109, respectively, may include clamping ring couplings.

The connection between input 210 and pipe 72 may be achieved in a number of different manners. Figure 3B illustrates another alternative of an anti-siphoning valve device 70 wherein the connection between input 210 and pipe 72 is achieved in a different manner.

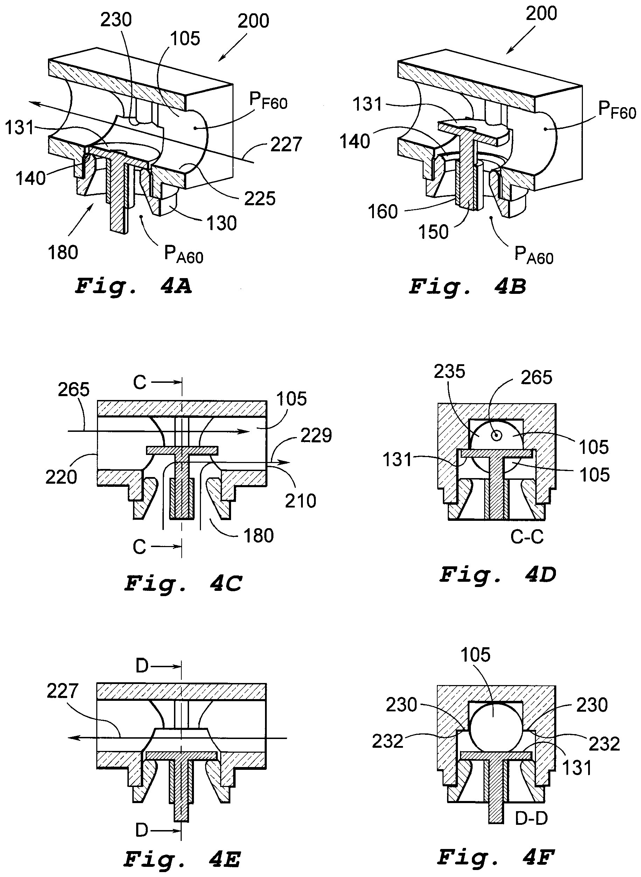

The housing 100 is provided with a bore 122 extending from the lower outer surface of the housing 100 to the channel 105. A valve unit 130 may be mounted, e.g. screwed, into the bore 122. The bore 122 intersects the channel 105 and is shown to have a slightly larger diameter than the channel 105 so as to be able to receive a valve plate 131. The valve plate 131 may have a circular shape with a diameter smaller than the diameter of the bore 122. Alternatively the diameter of the valve plate 131 may correspond to the diameter of the bore 122. The valve plate 131 can rest sealingly against a first seat 140 (See Fig 4A and/or 4B) that may carry a sealing means 142. The sealing means 142 may be embodied by an O-ring 142 (See Fig 3). The valve plate 131 is carried by a central shaft 150 guided in a guide 160. The guide 160 is carried by a bush 170 through the medium of radially extending arms, wherein the bush 170 is fixed and connected sealingly to the wall of the bore 122 so that the bush 170 will have a transit channel 180 that is screened by the valve plate 131. The cross-sectional area of the transit channel 180 may substantially correspond to the cross-sectional area of the housing channel 105. According to an alternative, the valve plate 131 may be located outside the cross-sectional area of the channel 105 when said plate rests on its seat 140, as illustrated in Fig. 3.

It will be evident from Fig. 3 that the valve housing need only have a wall thickness that will enable a conventional connection to be established between the valve unit 130 and the wall of the bore 122, wherewith the air transit channel 180 of the valve unit 130 may have a cross-sectional area corresponding to that of the channel 105. The valve unit 130 may therefore be made with only small, if any, protrusions from the valve housing 100.

Alternatives of the valve arrangement 70 may be produced in different sizes commensurate with the dimensions of conduits or pipes 72 and 74, respectively.

**Figures 2A, 2B and 2C** are sectional side views of a complete fluid delivery output unit 42. The complete fluid delivery output unit 42 may also be referred to as tap valve 42.

**Figures 2AA, 2BB and 2CC** are sectional side views of a part 980 of the fluid delivery output unit 42. The Figures 2AA, 2BB and 2CC correspond to Figures 2A, 2B and 2C.

The fluid delivery output unit 42 may be made up by two main constituent parts 70, 45A and 45B. The first part 70 is a semi-manufactured valve unit 45A providing all necessary valve seats for shutting off, starting and regulating the flow of the first fluid, while also advantageously providing all necessary valve seats for achieving an anti-siphoning function as well as a check-valve function.

The second main constituent part 45B is a semi-manufactured valve unit providing a handle attachment portion 930 (See Fig 2A, B, C) adapted for attachment of a handle 46 (See Fig 1). The handle may be manually operated by a user in order to control the flow of first fluid so as to e.g. provide a flow of first fluid out of an associated output opening 48.

The fluid delivery output unit 42 may include a valve 45 that can be operated to an open state, by means of a handle 46 (See Fig 1), for the purpose of letting first fluid flow out of an associated output opening 48. The valve 45 can also be operated to a closed state (See Fig 2A and Fig 2AA), by means of the handle 46, such that fluid is prevented from flowing out of the associated output opening 48. Hence, in the closed state of the valve 45 the valve member 920 is forced to rest against the valve seat 910. This force is achieved by means of control rod 940 which may be operated by the handle 46. When the handle 46 is turned, the handle attachment portion 930 also turns and causes the control rod 940 to engage means for causing the rod 940 to move in its direction of elongation so as to operate the valve member 920 between a forced closed state shown in Fig 2A, and an "allow outflow of first fluid" state, as shown in Fig 2B and Fig 2BB.

Hence, the valve 45 can be operated to the "allow outflow of first fluid" state (See Fig 2B and Fig 2BB), by means of the handle 46, such that fluid is allowed to flow out of the associated output opening 48 when there is a sufficiently high fluid supply pressure level $P_O$; $P_{O1}$; $P_{35:1}$ to force the valve member 920 away from the valve seat 910. The "allow outflow of first fluid" state may also be referred to as "open state", since under conditions when the fluid supply pressure is sufficiently high, the valve 45 will allow an outflow of first fluid. The fluid flowing out through orifice 915 will be lead by a pipe 74 to the associated output opening 48.

With ref to fig 2BB, **the valve seat 910** encloses an outlet orifice 915, said outlet orifice constituting an outlet end 915 of the channel 105. The valve seat 910 is shaped so as to sealingly meet the movable valve member 920 so as to enable control of a flow of said first fluid through said outlet orifice.

According to a preferred embodiment of the valve device 45 and of the fluid delivery output unit 42, the valve seat 910 also operates as a valve seat 910 for a check valve 950.

The valve 45 operates as a check valve 950 in the following manner: The movable valve member 920 may be spring biased towards the valve seat 910 such that the fluid supply pressure level ($P_O$; $P_{O1}$; $P_{35:1}$) acting on a surface of the second movable valve member facing said outlet orifice 915 generates a force so as to urge the movable valve member 920 away from the valve seat 910. This force, generated by the fluid pressure in the channel 105 may therefore cause the movable valve member 920 to move away from the valve seat 910 (as shown in Fig 2B and Fig 2BB) when that force is greater than the biasing force of said spring 970. However, when the fluid pressure in the channel 105 at the orifice 915 drops so that the force of the fluid pressure becomes lower than that of the spring 970, the movable valve member will be urged, by the spring 970, towards valve seat 910 (see Fig 2C and Fig 2CC). In this manner the valve seat 910 will also act to provide an essential part of a check valve function.

According to an embodiment, the valve seat 910, in operation, is a valve seat for a tap valve, as discussed above. Hence, the movable valve member 920 may be biased towards the valve seat 910 by control rod 940 so as to enable control of the flow of said first fluid through said outlet orifice 915 by operation of the control rod 940.

**Figures 4A and 4B** are sectional perspective side views of an alternative of the central part, between lines X1 and X2 in Figure 3, of the valve arrangement 70. Alternatives of the central part of the valve housing 100 are herein referred to by reference numeral 200.

Figure 4A illustrates the central part 200 of the valve arrangement 70 when the valve arrangement 70 is in its closed position, i.e. when the valve plate 131 rests sealingly against the first seat 140. The first seat 140may carry a sealing means 142 (see Fig 3).

Figure 4B illustrates the central part 200 of the valve arrangement 70 when the valve arrangement 70 is in an open position, i.e. when the valve plate 131 is at a distance away from the first seat 140.

A valve arrangement 70 is suitable for mounting in an air environment having an ambient pressure $P_{A60:1}$ (See Fig 3). The valve housing 100 of the valve arrangement 70 has an input 210 for connection to a pipe 72 of the fluid supply piping system 35 having a fluid pressure $P_{F60:1}$ and an output 220 for connection to a fluid outfeed conduit 74, 40. The housing body 100, 200, 130, which is positioned between the input 210 and the output 220 has a channel 105 for connecting the input 210 with the output 220; said channel 105 being defined by an inner surface 225 of said housing. Arrow 227 indicates the direction of flow of the fluid through channel 105 when the valve unit 130 is in the closed state (See Fig 4A and 4E) and when the valve 45 (See Figure 1) is in an open state.

The valve unit 130 has a closed state and an open state dependent on a pressure difference $\Delta P$ between the pressure $P_{F60:1}$ in the channel 105 and the ambient pressure $P_{A60:1}$ of the air surrounding the valve arrangement 70. The valve unit 130 advantageously assumes the open state when the fluid pressure $P_{F60:1}$ is beneath the ambient pressure $P_{A60:1}$ such that air can be sucked from the housing environment into the channel 105 so as to prevent reflux of fluid from said fluid outfeed conduit 74, 40.

**Figure 4C** is a sectioned side view of the central part 200 of the valve housing 100 of Figure 4B, illustrating the valve unit in the open state. The direction of flow of air from the environment into the channel 105, via transit channel 180, is illustrated by arrow 229 in Figure 4C.

**Figure 4D** is a cross-sectional view taken along line C-C of FIG 4C.

**Figure 4E** is a sectioned side view of the central part 200 of the valve housing 100 of Figure 4A, illustrating the valve arrangement 70 in the closed state.

**Figure 4F** is a cross-sectional view taken along line D-D of FIG 4E.

It can be clearly seen in Figures 4A, 4B, 4C, 4D, 4E, 4F that the valve plate 131 can rest against a shoulder 230 in the open state of the valve unit. The shoulder 230 has a surface 232 adapted to meet with a part of the upper surface of the valve plate 131 in the open state of the valve arrangement 70. The shoulder 230 may be provided on at least one side of the channel 105 such that when the valve plate 131 rests against the shoulder 230 a portion 235 of the channel 105 remains open above the upper surface of valve plate 131.

With reference to Figure 4F, a there may be provided one shoulder 230 on each side of the channel 105. The shoulders 230 may protrude into the cross-sectional area of the channel 105, as can be seen in Figs 4D and 4F. The shoulders 230 may be shaped and dimensioned such that when the valve plate 131 rests against the shoulders 230, then the upper surface of valve plate 131 will be positioned in the channel 105 such that a portion 235 of the channel 105 remains above the upper surface of valve plate 131.

*An elevated first valve seat*

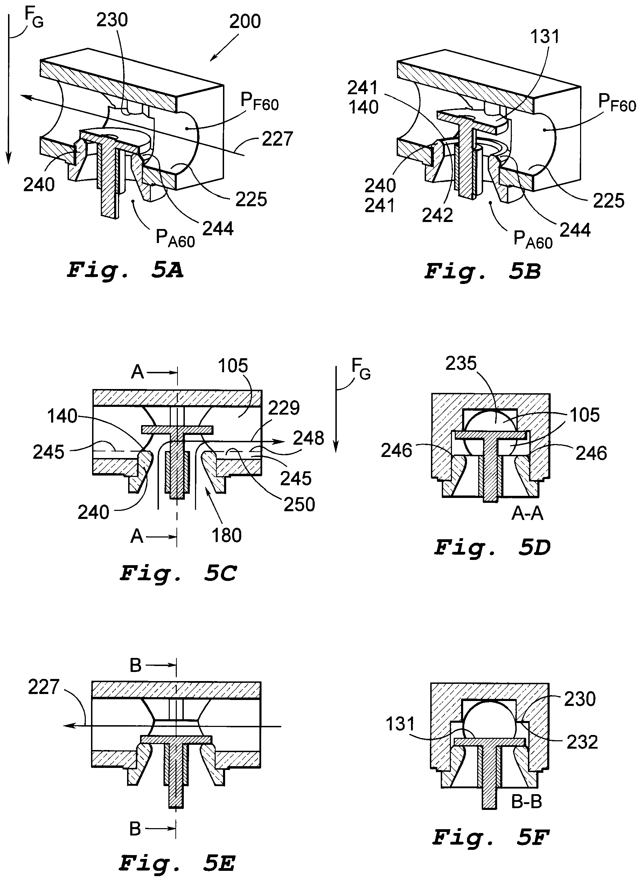

**Figures 5A and 5B** are sectional perspective side views of another alternative of the central part 200 of the valve arrangement 70.

Figure 5A illustrates the central part 200 of the valve arrangement 70 when the valve arrangement 70 is in its closed position, i.e. when the valve plate 131 rests sealingly against the first seat 140, and Figure 5B illustrates the central part 200 of the valve arrangement 70 when the valve arrangement 70 is in an open position, i.e. when the valve plate 131 is at a distance away from the first seat 140. The first seat 140 may carry a sealing means 142 (see Fig 3).

The valve arrangement 70 is adapted to assume the open position in response to a decreased fluid pressure $P_{F60:1}$, as discussed above, such that air can flow into the channel 105 from the housing environment so as to prevent reflux of fluid from said fluid outfeed conduit 74, 40.

**Figure 5C** is a sectioned side view of the central part 200 of the valve housing 100 of Figure 5B, illustrating the valve unit in the open state. The direction of flow of air from the environment into the channel 105, via transit channel 180, is illustrated by arrow 229 in Figure 5C. **Figure 5D** is a cross-sectional view taken along line A-A of FIG 5C.

**Figure 5E** is a sectioned side view of the central part 200 of the valve housing 100 of Figure 5A, illustrating the valve arrangement 70 in the closed state.

**Figure 5F** is a cross-sectional view taken along line B-B of FIG 5E.

With reference to Figures 5A, 5B, 5C, 5D, 5E, 5F the valve plate 131 can rest against a shoulder 230 in the open state of the valve unit. The shoulder 230 has a surface 232 adapted to meet with a part of the upper surface of the valve plate 131 in the open state of the valve arrangement 70. The shoulder 230 may be provided on at least one side of the channel 105 such that when the valve plate 131 rests against the shoulder 230, then a portion 235 of the channel 105 remains above the upper surface of valve plate 131.

With reference to Figure 5F, a there may be provided one shoulder 230 on each side of the channel 105. The shoulders 230 may protrude into the cross-sectional area of the channel 105, as can be seen in Figs 5D and 5F. The shoulders 230 may be shaped and dimensioned such that when the valve plate 131 rests against the shoulders 230, then the upper surface of valve plate 131 will be positioned in the channel 105 such that a portion 235 of the channel 105 remains above the upper surface of valve plate 131.

According to the Figure 5A/5B/5C/5D/5E/5F alternative of the valve arrangement 70, the first valve seat 140 is placed on a ridge 240 protruding from the bottom of the inner surface of the housing 100.

The ridge 240 advantageously prevents residual fluid 245 from trickling out via transit channel 180 when the valve unit is in its open position. Instead any residual fluid in the channel 105 of the housing portion 200 will remain on the bottom 250 of channel 105 due to the force of gravity $F_G$ when the valve arrangement 70 is mounted as illustrated in Figure 5C, such that the force of gravity $F_G$ acts in the direction parallel to the length of shaft 150. Hence, the valve seat 140 and the ridge 240 co-operate to form an elevated valve seat 241 such that a certain amount of fluid 245, which may be present on the bottom of the inner surface of housing 100, is prevented from trickling out through transit channel 180. The elevated valve seat 241 protrudes from the bottom of the inner surface of the housing 100. According to an alternative, the outer side wall 244 of the elevated valve seat 241 co-operates with the inner wall of the bore 122 so as to form a channel 246 (See Figure 5D). The provision of channel 246 advantageously allows for a limited flow of a residual fluid 245 between the input side 210 and the output side 220 of valve arrangement 70, without any fluid flowing out the transit channel 180, even when the valve arrangement 70 is in its open position. When the force of gravity $F_G$ acts in the direction parallel to the length of shaft 150, then a limited amount of fluid 245, which may be present inside housing 100, is drawn to the bottom of the inner surface so that a liquid surface 248 is formed. When the limited amount of fluid 245 is so limited that the liquid surface 248 is below the height of the ridge 240, then the ridge functions to prevent any liquid from leaking out.

Hence, the Figure 5 alternative of valve arrangement 70 advantageously eliminates, or substantially reduces the risk for leakage of fluid, not only when the valve unit is in the closed position but also when the valve unit is in the open position.

In fact, tests indicate that the provision of the elevated valve seat 241 having non-sharp edges actually leads to an increase in air flow capacity. This is believed to depend on advantageous aerodynamic effects, occurring when an air stream passes over a ridge 240 having rounded edges or non-sharp edges. In this connection it is noted that according to an alternative, the ridge 240 has first ridge side wall 242 and second ridge side wall 244, respectively. The first ridge side wall 242 and second ridge side wall 244 are non-perpendicular in relation to the substantially flat plane of the first valve seat 140, such that air can flow 229 over a somewhat rounded surface (See Figure 5C). In effect, it has been found that a rounded shape of the ridge 240 functions to improve the flow of air.

An upper second valve seat

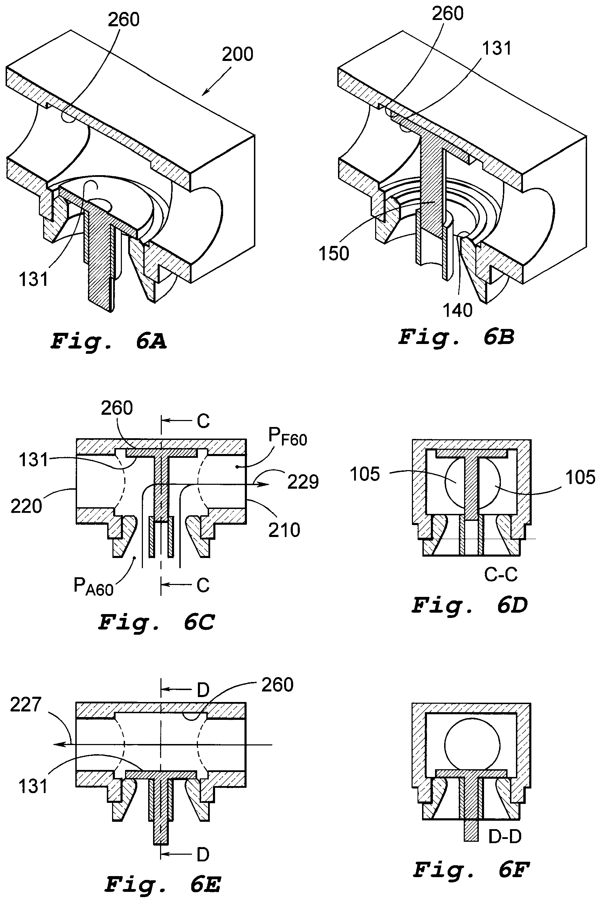

**Figures 6A and 6B** are sectional perspective side views of yet another alternative of the central part 200 of the valve arrangement 70.

Figure 6A illustrates the central part 200 of the valve arrangement 70 when the valve arrangement 70 is in its closed position, i.e. when the valve plate 131 rests sealingly against the first valve seat 140, and Figure 6B illustrates the central part 200 of the valve arrangement 70 when the valve arrangement 70 is in an open position. The figure 6 alternative of the valve arrangement 70 advantageously includes an upper valve seat 260, whereas the first valve seat is as described in connection with Figures 4A-4F above.

The valve arrangement 70 is adapted to assume the open position in response to a decreased fluid pressure $P_{F60:1}$, as discussed above, such that air can flow into the channel 105 from the housing environment so as to prevent reflux of fluid from said fluid outfeed conduit 74, 40.

**Figure 6C** is a sectioned side view of the central part 200 of the valve housing 100 of Figure 6B, illustrating the valve unit in the open state. The direction of flow of air from the environment into the channel 105, via transit channel 180, is illustrated by arrow 229 in Figure 6C. **Figure 6D** is a cross-sectional view taken along line C-C of FIG 6C.

With reference to Figure 4C, it can be seen that in the Figure 4 alternative a portion 235 of the channel 105 remains above the upper surface of valve plate 131 when the valve plate 131 is in its fully opened position. The provision of such a portion 235 makes it possible, at least theoretically, for fluid or air to flow above the upper surface of valve plate 131 from the output 220 towards the input 210 when the valve plate 131 is in its fully opened position, as illustrated by arrow 265 (See Figure 4C). By contrast, with reference to Figure 6C, the upper valve seat 260 may advantageously be shaped and dimensioned such that when the valve plate 131 rests against the upper valve seat 260 then no portion of the channel 105 remains open above the upper surface of valve plate 131.

In other words, the upper valve seat 260 may advantageously be shaped and dimensioned such that

when the valve plate 131 rests against the upper valve seat 260

then the output side 220 and the input side 210 of valve arrangement cannot communicate via any space above the upper surface of valve plate 131. The valve plate 131 co-operates with the upper valve seat 260 such that when the valve plate 131 rests on the upper valve seat 260 then substantially no fluid can flow above the upper surface of valve plate 131 between the output side 220 and the input side 210 of valve arrangement. Hence, when the valve plate 131 rests on the upper valve seat 260 it may rest substantially sealingly against the upper valve seat 260.

Accordingly, the valve arrangement 70 may include a valve housing 100 having:

**an input** 210 for connection to a fluid supply piping system 72, 35 having a fluid pressure $P_{F60:1}$;

**an output** 220 for connection to a fluid outfeed conduit 74, 40; and

**a housing body** 100, 200, 130 positioned between the input 210 and the output 220, said housing body having **a channel 105** for connecting the input 210 with the output 220; wherein the housing body comprises

**a valve unit 130** having a closed state and an open state dependent on a pressure difference $\Delta P$ between the fluid pressure PF60:1 and said ambient pressure PA60:1; wherein

the valve plate 131 rests sealingly against a first valve seat 140, when the valve unit 130 is in the closed state, such that fluid is prevented from leaving the channel 105; and wherein

the valve arrangement 70 is such that in operation said atmospheric pressure PA60:1 causes said valve plate 131 to rest on an upper valve seat 260 when the fluid pressure PF60:1 is beneath the atmospheric pressure PA60:1 such that the output side 220 and the input side 210 of valve arrangement cannot communicate via any space above the upper surface of valve plate 131 while said air can flow into the channel (105) from the housing environment via a transit channel 180.

Hence, the valve arrangement 70 may be such that in operation said atmospheric pressure PA60:1 causes said valve plate 131 to rest sealingly, or substantially sealingly, on the upper valve seat 260 when the fluid pressure PF60:1 is beneath the atmospheric pressure PA60:1 such that the only communication path between the output side 220 and the input side 210 of the valve arrangement runs on that side of the valve plate 131 which faces the first valve seat 140. When the only communication path between the output side 220 and the input side 210 of the valve arrangement runs on that side of the valve plate 131 which faces the first valve seat 140, the risk for any fluid to pass from the output side 220 to the input side 210 of the valve arrangement is eliminated, or substantially eliminated, since the mouth of the transit channel 180 faces the first valve seat 140.

According to an alternative the upper valve seat 260 is advantageously shaped and dimensioned such that the upper surface of the valve plate 131 is located outside the cross-sectional area of the channel 105 when the valve plate 131 rests on its upper valve seat 260. This advantageously allows for a substantially larger passage for air to flow in towards the fluid input side 210 of the valve arrangement 70, when the fluid pressure level $P_{F60}$ drops as discussed in connection with Figure 2 above.

**Figure 6E** is a sectioned side view of the central part 200 of the valve housing 100 of Figure 6A, illustrating the valve arrangement 70 in the closed state.

**Figure 6F** is a cross-sectional view taken along line D-D of FIG 6E.

With reference to Figure 6C it is to be understood that when the when valve arrangement 70 is provided with an upper valve seat 260, which is shaped and dimensioned as an indentation so as to allow the upper surface of the valve plate 131 to be located outside the cross-sectional area of the channel 105, the ambient pressure $P_{A60}$ may act on the lower surface of the valve plate 131 to open a large passage for air to flow in towards the fluid input side 210 of the valve arrangement 70, when the pressure level $P_{F60}$ drops as discussed in connection with Figure 2 above. Whereas it can be seen that in the alternative shown in Figures 4C, 4D the valve plate 131 will be positioned substantially in the middle of the channel 105 when that valve arrangement is in its fully open state, thus still limiting the air flow 229 through the air flow passage, it can be seen in Figures 6C, 6D that the ambient pressure may move the valve plate 131 to a position where it is entirely located in the upper 25 % of the distance from the ceiling of the channel 105 to the floor of the channel 105. Hence, the Figure 6 alternative allows for a substantially larger passage for air to flow in towards the fluid input side 210 of the valve arrangement 70, when the pressure level $P_{F60}$ drops as discussed in connection with Figure 2 above.

An alternative comprising an elevated first valve seat and an upper second valve seat

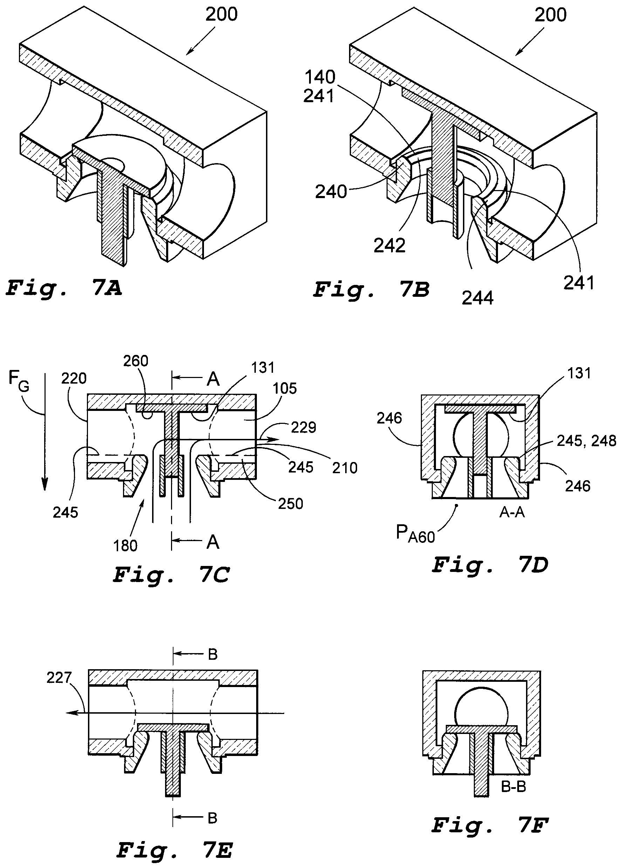

**Figures 7A and 7B** are sectional perspective side views of yet another alternative of the central part 200 of the valve arrangement 70.

Figure 7A illustrates the central part 200 of the valve arrangement 70 when the valve arrangement 70 is in its closed position, i.e. when the valve plate 131 rests sealingly against the elevated first valve seat 241, and Figure 7B illustrates the central part 200 of the valve arrangement 70 when the valve arrangement 70 is in an open position.

The Figure 7 alternative of the valve arrangement 70 advantageously includes the elevated first valve seat 241, as discussed above in connection with Figures 5A - 5F. As mentioned above, the elevated first valve seat 241 may comprise the first valve seat 140 being arranged on a ridge 240 protruding from the inner surface of the housing 100 into the cross-sectional area of the channel 105, as described in connection with Figures 5A-5F. The first seat 140 may carry a Sealing means 142 (see Fig 3).

The valve arrangement 70 is adapted to assume the open position in response to a decreased fluid pressure $P_{F60:1}$, as discussed above, such that air can flow into the channel 105 from the housing environment so as to prevent reflux of fluid from said fluid outfeed conduit 74, 40. Moreover, the Figure 7 alternative of the valve arrangement 70 advantageously includes the upper valve seat 260, as described above in connection with Figures 6A-6F.

**Figure 7C** is a sectioned side view of the central part 200 of the valve housing 100 of Figure 6B, illustrating the valve unit in the open state. The direction of flow of air from the environment into the channel 105, via transit channel 180, is illustrated by arrow 229 in Figure 7C. **Figure 7D** is a cross-sectional view taken along line A-A of FIG 7C.

**Figure 7E** is a sectioned side view of the central part 200 of the valve housing 100 of Figure 7A, illustrating the valve arrangement 70 in the closed state.

**Figure 7F** is a cross-sectional view taken along line B-B of FIG 7E.

The provision of an elevated valve closure seat 241 at the bottom of the inner surface of the housing 100 allows for an amount of residual fluid to remain in the channel 105 without trickling out via transit channel 180. The volume of residual fluid is dependent on the height of the ridge 240 and the cross sectional area of the channel 105, as can be deduced from Figure 7C in conjunction with Figure 7D. When the channel 105 has a substantially circular cross sectional area, as illustrated in Figure 7D, the volume of residual fluid is dependent on the height of the ridge 240 and the radius of the channel 105. Hence, the Figure 7 alternative of valve arrangement 70 advantageously eliminates, or substantially reduces the risk for leakage of fluid, not only when the valve plate 131 rests against the elevated first valve seat 241, but also when the valve plate 131 is in the position shown in Figure 7B and 7C, since the ridge 240 co-operates with the air streaming in through transit channel 180 such that the streaming air 229 reduces the risk of residual fluid 245 trickling out via transit channel 180 when the valve unit is in its open position. Any residual fluid in the channel 105 of the housing portion 200 will tend to remain on the bottom 250 of channel 105 due to the force of gravity $F_G$ co-operating with the flow of air from transit channel 180 which will keep residual fluid 245 from flowing over the ridge 240 when the valve arrangement 70 is mounted as illustrated in Figure 5C, such that the force of gravity $F_G$ acts in the direction parallel to the length of shaft 150.

The elevated valve seat 241 co-operates with the inner wall of the bore 122 so as to form a channel 246 (See Figure 5D and 7D).

Accordingly, the valve arrangement 70 may include a valve housing 100 having:

an input 210 for connection to a fluid supply piping system 35, 72 having a fluid pressure $P_{F60:1}$;

an output 220 for connection to a fluid outfeed conduit 74, 40; and

a housing body 100, 200, 130 positioned between the input 210 and the output 220, said housing body having

a channel 105 for connecting the input 210 with the output 220; and

a valve unit 130 which, in operation, has a closed state or an open state dependent on a pressure difference $\Delta P$ between the fluid pressure PF60:1 and said ambient pressure PA60:1, the valve unit 130 having a movable valve plate 131 and a transit channel 180, wherein

the valve plate 131 is adapted to rest sealingly against a first valve seat 140, provided at the bottom of the inner surface of the housing body 100, such that fluid is prevented from leaving the channel 105 when the valve unit 130 is in the closed state, and wherein

the valve arrangement 70 is such that, when the fluid pressure PF60:1 is beneath the atmospheric air pressure PA60:1 and said pressure difference ΔP exceeds a threshold value, said pressure difference ΔP causes

said valve plate 131 to rest on an upper valve seat 260 such that the output side 220 and the input side 210 of valve arrangement cannot communicate via any space above the upper surface of valve plate 131 while

allowing air flow into the channel (105) from the housing environment via said transit channel 180 below the valve plate 131; and wherein

the first valve seat 140 is elevated from the bottom of the inner surface of the housing 100 so as to form an elevated valve seat 241 adapted to allow an amount of residual fluid 245 to remain on the bottom of the inner surface of the housing 100 while preventing such residual fluid 245 from leaving the channel 105 via the transit channel 180 when the valve unit 130 is in the open state.

According to an alternative, the elevated valve seat 241 co-operates with the inner wall of the bore 122 so as to form a channel 246 (See Figure 7D) at the bottom of the inner surface of the housing body 100 such that an amount of residual fluid 245 may flow passed the transit channel 180 while preventing such residual fluid 245 from leaving the channel 105 via the transit channel 180.

*An alternative comprising an elevated first valve seat and an elevated second valve seat*

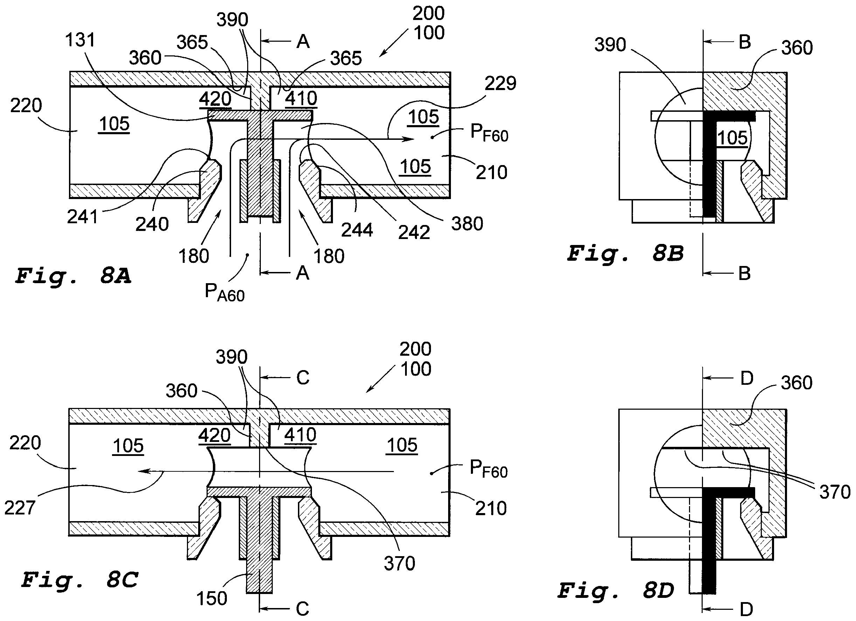

**Figures 8A, 8B, 8C and 8D** are illustrations of yet another alternative of the central part 200 of the valve arrangement 70.
**Figure 8A** is a sectioned side view of the central part 200 of the valve housing 100, illustrating the valve unit in the open state. The direction of flow of air from the environment into the channel 105, via transit channel 180, is illustrated by arrow 229 in Figure 8A.
**Figure 8B** is a partially sectioned view taken along line A-A of FIG 8A.
**Figure 8C** is a sectioned side view of the central part 200 of the valve housing 100, illustrating the valve arrangement 70 in the closed state.
**Figure 8D** is a partially sectioned view taken along line C-C of FIG 8C. As mentioned above, the central part 200 of the valve housing 100 may be symmetrical with respect to line D-D in Figure 8D.
The valve arrangement 70 illustrated in Figures 8A, 8B, 8C and 8D comprises the elevated first valve seat 241, as described above in this document. Hence, the first valve seat 140 is elevated from the bottom of the inner surface of the housing 100 so as to form an elevated valve seat 241 adapted to allow an amount of residual fluid 245 to remain on the bottom 250 of the inner surface of the housing 100 while preventing such residual fluid 245 from leaving the channel 105 via the transit channel 180 when the valve unit 130 is in the open state. Hence, the Figure 8 valve arrangement 70 advantageously eliminates, or substantially reduces leakage of fluid, not only when the valve unit is in the closed position, but also when the valve unit is in the open position.
Moreover, the Figure 8 valve arrangement 70 advantageously includes an upper ridge member 360. The valve plate 131 can rest against the upper ridge member 360 in the open state of the valve unit, as illustrated by figures 8A and 8B. The upper ridge member 360 has a surface 370 (See Fig 8C) adapted to meet with a part of the upper surface of the valve plate 131 in the open state of the valve arrangement 70.
With reference to Figure 8A, the upper ridge member 360 may be shaped and dimensioned to protrude from the inner surface 365 of the housing 100 and to stretch across the breadth of the channel 105 (see Figure 8B). In this connection it is noted that the central part 200 of the valve housing 100 may be symmetrical with respect to line B-B in Figure 8B.
Whereas arrow 227 (See Fig 8C) indicates the direction of fluid flow 227 when valve arrangement 70 is in the closed position, the upper ridge member 360 extends in a direction perpendicular to the direction of fluid flow 227 so as to separate the upper portion 390 of channel 105 into an output side upper portion 420, and an input side upper portion 410 (See Figure 8A). The upper portion 390 is the space 390 between the upper surface of the valve member 131 and the inner surface 365 of the housing 100 when the valve is in its open state so that the valve member 131 rests against the surface 370 of ridge member 360. Hence, the volume of the space 390 depends on the extent of protrusion, i.e. the height of the ridge member 360 and the surface area of the upper surface of the valve member 131.
The upper ridge member 360 is shaped and dimensioned such that when the valve plate 131 rests against the upper ridge member 360, then the input side 210 and output side 220 of channel 105 can communicate only via the space 380 below the valve plate 131 (See Fig 8A). In other words, the upper ridge member 360 may function as a protruding upper valve seat 360 such that the valve plate 131 can rest against the protruding upper valve seat 360 so as to isolate the upper portion 420 of channel 105 on the output side 220 from the upper portion 410 of channel 105 on the input side 210. This advantageous effect is achieved since the valve arrangement 70 opens in dependence on the fluid pressure $P_{F60}$ in the channel 105 becoming lower than the ambient pressure $P_{A60}$ on the outside of valve arrangement 70, as discussed above e.g. in connection with Figure 2. Hence, when the ambient air pressure $P_{A60}$ causes the valve plate 131 to rest against the protruding upper valve seat 360, there will no longer be any unbroken fluid connection between the output side 220 and the input side 210 of channel 105. This is because the space 380 below the valve plate 131 (See Fig 8A) will be filled with air when the valve arrangement is in the open state, and because the upper ridge member 360 is shaped and dimensioned such that it co-operates with the valve plate 131 to close the upper portion 390 of channel 105. In this connection, the upper portion of channel 105 is the space 390 above the valve plate 131 (See Fig 8A) when the valve plate 131 rests against the protruding upper valve seat 360.

Hence, the Figure 8 valve arrangement 70 advantageously includes an upper ridge member 360 which co-operates with the movable valve member 131 to separate the upper space 410 of the input side 210 from the upper space 420 of the output side 220 when the fluid pressure $P_{F60}$ becomes lower than the ambient pressure $P_{A60}$ on the outside of valve arrangement 70.

Hence, in response to the fluid pressure $P_{F60}$ becoming lower than the ambient pressure $P_{A60}$, the movable valve member 131 co-operates with the upper ridge member 360 to divide the upper portion 390 of channel 105 into a first space 410 and a second space 420 such that fluid is prevented from flowing from the second space 420 to the first space 410. Fluid is prevented from flowing from the second space 420 to the first space 410, because the movable valve member 131 will rest on the ridge member 360, as illustrated in Figures 8A and 8B. According to an example, the movable valve member 131 will rest sealingly on the ridge member 360, when the valve unit 130 is in the open state and the pressure level PF60:1 at the input side 210 is beneath the ambient atmospheric air pressure PA60:1 so that the resulting pressure difference $\Delta P$ exceeds a threshold value. Moreover, fluid is prevented from flowing from the second space 420 to the first space 410, because the space 380 below the valve plate 131 (See Fig 8A) will be filled with air streaming in via transit channel 180, when the pressure level PF60:1 at the input side 210 becomes lower than the ambient pressure $P_{A60}$.

According to the Figure 8 example, the upper ridge member 360 is arranged substantially above the centre of the movable valve member 131.

A valve arrangement 70 may include a valve housing 100 having:

an input 210 for connection to a fluid supply piping system 35, 72 having a fluid pressure $P_{F60:1}$;

an output 220 for connection to a fluid outfeed conduit 74, 40; and

a housing body 100, 200, 130 positioned between the input 210 and the output 220, said housing body having

a channel 105 for connecting the input 210 with the output 220; and

a valve unit 130 which, in operation, has a closed state or an open state dependent on a pressure difference $\Delta P$ between the pressure level PF60:1 in the channel 105 and said ambient pressure PA60:1, the valve unit 130 having a movable valve plate 131 and a transit channel 180, wherein

the valve plate 131 is adapted to rest against a first valve seat 241, provided at the bottom of the inner surface of the housing body 100, such that fluid is prevented from leaving the channel 105 when the valve unit 130 is in the closed state, and wherein

the valve arrangement 70 is such that, when the fluid pressure PF60:1 is beneath the atmospheric air pressure PA60:1 and said pressure difference $\Delta P$ exceeds a threshold value, said pressure difference $\Delta P$ causes

said valve plate 131 to rest on an upper valve seat 260 such that the output side 220 and the input side 210 of valve arrangement cannot communicate via any space above the upper surface of valve plate 131 while

allowing air flow into the channel (105) from the housing environment via said transit channel 180 below the valve plate 131; and wherein

the upper valve seat 260 includes an upper ridge member 360 which is shaped and dimensioned to protrude from the inner surface 365 of the housing 100 such that when the valve plate 131 rests against the upper ridge member 360, the upper ridge member 360 co-operates with the valve plate 131 and the inner surface 365 of the housing 100 to form a cavity 410 on the input side 210 of the upper ridge member 360.

When the fluid pressure PF60:1 is beneath the atmospheric air pressure PA60:1 and said pressure difference $\Delta P$ exceeds a threshold value, said pressure difference $\Delta P$ causes air to stream in the direction of arrow 229 (See Fig 8A) through the transit channel 180 into channel 105 and towards the input 210. This stream 229 of flowing air causes a suction of fluid and/or air from the cavity 410 on the input side 210 of the upper ridge member 360 so that the pressure level in the cavity 410 becomes equal to or even lower than the pressure level in other parts of channel 105. This advantageously leads to an increased force acting on the valve plate 131 in the direction towards the upper ridge member 360, since the force acting on the valve plate 131 depends on the difference between the pressure on the lower side of valve plate 131 and the pressure on the upper surface of valve plate 131.

With reference to figure 8, there is advantageously provided an upper valve seat 370 which is shaped and dimensioned such that, in the open state of the valve unit, the upper valve seat 370 co-operates with the valve member 131 and a portion of the inner surface 365 of the housing 100 to form a cavity 410 such that the cavity 410 is open towards the input 410 of the valve arrangement 70.

The upper ridge member 360 has a surface 370 (See Fig 8C) adapted to meet with a part of the upper surface of the valve plate 131 in the open state of the valve arrangement 70.

One version of the first valve seat 140 is elevated from the bottom of the inner surface of the housing 100 so as to form an elevated valve seat 241 adapted to allow an amount of residual fluid 245 to remain on the bottom of the inner surface of the housing 100 while preventing such residual fluid 245 from leaving the channel 105 via the transit channel 180 when the valve unit 130 is in the open state.

Another version of the first valve seat 140 is substantially flush with the bottom of the inner surface of the housing 100 while the upper valve seat 260 includes an upper ridge member 360 as described above.

An upper ridge member

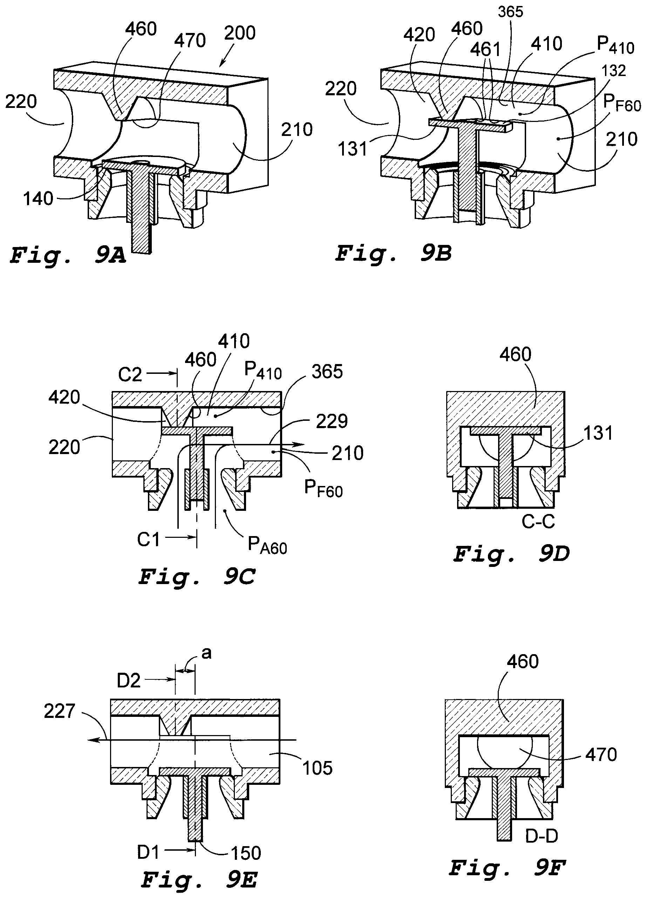

**Figures 9A and 9B** are sectional perspective side views of yet another alternative central part 200 of the valve arrangement 70 (See Figures 9A and 9B in conjunction with Figure 3).

Figure 9A illustrates the central part 200 of the valve arrangement 70 when the valve arrangement 70 is in its closed position, i.e. when the valve plate 131 rests sealingly against the first valve seat 140, and Figure 9B illustrates the central part 200 of the valve arrangement 70 when the valve arrangement 70 is in an open position.

The valve arrangement 70 is adapted to assume the open position in response to a decreased fluid pressure $P_{F60:1}$, as discussed above, such that air can flow into the channel 105 from the housing environment so as to prevent reflux of fluid from said fluid outfeed conduit 74, 40.

**Figure 9C** is a sectioned side view of the central part 200 of the valve housing 100 of Figure 9B, illustrating the valve unit in the open state. The direction of flow of air from the environment into the channel 105, via transit channel 180, is illustrated by arrow 229 in Figure 9C. **Figure 9D** is a cross-sectional view taken along line C1-C2 of FIG 9C.

**Figure 9E** is a sectioned side view of the central part 200 of the valve housing 100 of Figure 9A, illustrating the valve arrangement 70 in the closed state. Arrow 227 indicates the direction of flow of the fluid through channel 105 when the valve unit 130 is in the closed state (See Fig 9E) and when the tap 45 (See Figure 1) is in an open state.

**Figure 9F** is a cross-sectional view taken along line D-D of FIG 9E.

The figure 9 valve arrangement 70 advantageously includes an upper ridge member 460, whereas the first valve seat 140 is as described in connection with Figures 4A-4F above. The upper ridge member 460 is similar to the upper ridge member 360, as described above in connection with Figure 8, but upper ridge member 460 is positioned differently in relation to the valve member 131.

In response to the fluid pressure $P_{F60}$ in channel 105 becoming lower than the ambient pressure $P_{A60}$, the movable valve member 131 co-operates with the upper ridge member 460 to divide the upper portion 390 of channel 105 into a first space 410 and a second space 420 such that fluid is prevented from flowing from the second space 420 to the first space 410 (See Fig. 9C). Fluid is prevented from flowing from the second space 420 to the first space 410, because the space 380 below the valve plate 131 (See Fig 8A) will be filled with air, when the fluid pressure $P_{F60}$ becomes lower than the ambient pressure $P_{A60}$. As discussed in connection with Figure 2 above, the pressure $P_{F60}$ depends on the pressure $P_{35:1}$, and when the fluid pressure $P_{35:1}$ suddenly falls, the valve member 131 will move toward the fully open position and there will be a stream 229 of air flowing in via transit channel 180 towards input 210 and piping system 35 (See Fig 9C in conjunction with Fig 2).

In this connection it is noted that the force acting to lift the valve plate 131 depends on the pressure difference $\Delta P$ between the lower and upper surfaces of valve plate 131. The force acting to lift the valve plate 131 also depends on the respective areas of the lower and upper surfaces of valve plate 131.

Moreover, it is noted that according to the Figure 9 alternative, the upper ridge member 460 is positioned at a distance a downstream, in the direction 227 of fluid flow, from the centre of shaft 150 (See Fig 9E). The centre of shaft 150 is indicated by line D1 in Figure 9E, and line D2 indicates the centre of upper ridge member 460, as seen in Figure 9E. This positioning of the upper ridge member 460 at a position off-centre and downstream in relation to the centre of valve plate 131 renders space 410 to be larger than space 420, when the ambient air pressure $P_{A60}$ causes air to flow 229 in via transit channel 180 (See Fig 9C and Fig.9A). Experiments indicate the Figure 9 alternative to prove even better performance than the Figure 8 alternative. For example, tests indicate that the valve member 131 in the figure 9 alternative moves faster from the closed position (figure 9A) to the open position (figure 9B) in response to a certain pressure difference.

This may be explained by the relatively large portion of the upper surface of plate 131 facing the space 410 which is on the input side 210, which may cause a stronger force directed to pushing the valve member 131 towards the open position shown in Figure 9B. When the valve member 131 approaches the position shown in Figure 9B it will also gradually strangle any flow that occurs in the space between the valve member 131 and ridge member 460 in the direction from output 220 towards input 210. Accordingly, the provision of the ridge member 460 at a position which is off-center in relation to the centre of shaft 150 (See Fig 9E) such that space 410 is larger than space 420 may co-operate with the sub-pressure originating from input side 410 to cause a stronger force directed to pushing the valve member 131 towards the ridge member 460.

This may be explained by the fact that when air streams 229 into the through channel 105, as illustrated in Figure 9C, the flow 229 of air will cause suction of fluid and air from the space 410. Hence, when plate 131 rests sealingly against the seat surface 461 of upper ridge member 460, the pressure $P_{410}$ in space 410, may become even lower than the pressure $P_{35:1}$, due to the suction of fluid and air from the closed space 410. This reduced pressure $P_{410}$ in combination with the relatively large portion of the upper surface of plate 131 facing the space 410 interact to cause a large force directed to keeping the plate 131 in the open position, as long as air keeps flowing in.

When the fluid pressure is re-established, on the other hand, the relatively large portion of the upper surface of plate 131 facing the space 410, which is the fluid input side 210 of the valve arrangement 70, will interact with the upper ridge member 460 to cause a large force directed to moving the plate 131 to the closed position.

Hence, the positioning of upper ridge member 460 at a position off-centre and downstream, in relation to the flow of fluid under normal conditions, renders improved performance of the valve arrangement 70.

The upper ridge member 460 has a surface 470 (See Fig 9A) adapted to meet with a part of the upper surface of the valve plate 131 in the open state of the valve arrangement 70, as shown in Figure 9B. With reference to Figure 9C, the ridge member 460 may be shaped and dimensioned to protrude from the inner surface 365 of the housing 100, 200 and to stretch across the breadth of the channel 105 (see also Figure 8B).

## A central part comprising an elevated first valve seat and an upper ridge member

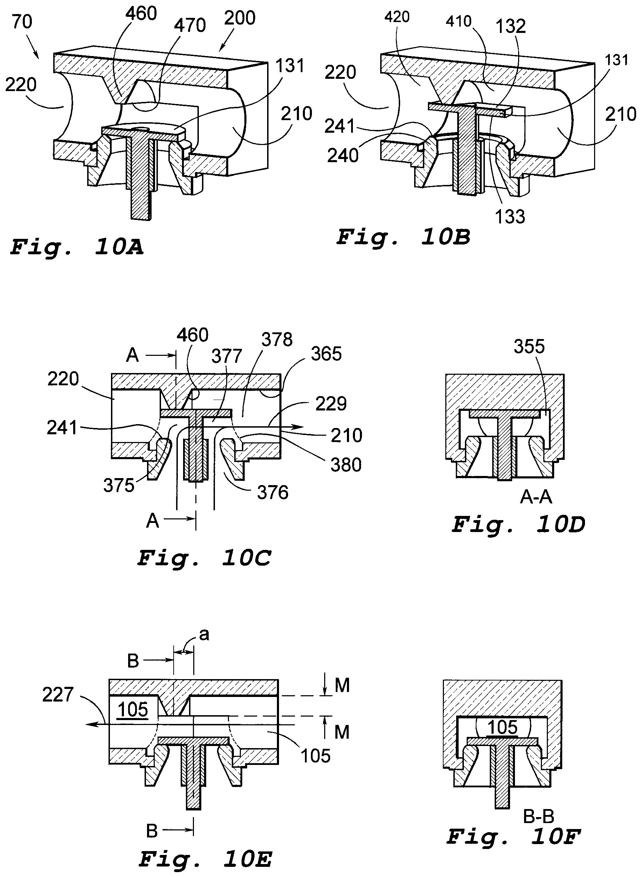

**Figures 10A and 10B** are sectional perspective side views of yet another central part 200 of the valve arrangement 70.

Figure 10A illustrates the central part 200 of the valve arrangement 70 when the valve arrangement 70 is in its closed position, i.e. when the valve plate 131 rests sealingly against the elevated first seat 241, and Figure 10B illustrates the central part 200 of the valve arrangement 70 when the valve arrangement 70 is in an open position. The Figure 10 valve arrangement 70 advantageously includes the upper ridge member, as described in connection with Figures 9A-9F.

The valve arrangement 70 is adapted to assume the open position in response to a decreased fluid pressure $P_{F60:1}$, as discussed above, such that air can flow into the channel 105 from the housing environment so as to prevent reflux of fluid from said fluid outfeed conduit 74, 40.

The figure 10 valve arrangement 70 advantageously includes the upper ridge member 460 as described in connection with Figures 9A-9F above.

Moreover, the figure 10 valve arrangement 70 comprises the elevated first valve seat 241, as described above in this document e.g. in connection with Figures 5, 7 and 8. Hence, the Figure 10 valve arrangement 70 advantageously eliminates, or substantially reduces leakage of fluid, not only when the valve unit is in the closed position, but also when the valve unit is in the open position.

The positioning of upper ridge member 460 at a position off-centre and downstream, in relation to the flow of fluid under normal conditions, renders improved performance of the valve arrangement 70.

When the fluid pressure is re-established, on the other hand, the relatively large portion of the upper surface of plate 131 facing the space 410, which is the fluid input side 210 of the valve arrangement 70, will interact with the upper ridge member 460 to cause a large force directed to moving the plate 131 to the closed position.

Hence, the positioning of upper ridge member 460 at a position off-centre and downstream, in relation to the flow of fluid under normal conditions, renders improved performance of the valve arrangement 70.

There are two main criteria that have to be considered for reflux preventing valves. The first criterion is to obtain at least a minimum flow of fluid during a specified pressure drop over the valve during normal condition when the valve is open. For instance the minimum permitted flow of fluid can be 0,35 litres at a pressure drop of 0,15 bar over the valve. The second criteria is that a specified sub-pressure in the fluid distribution piping system on the input side of the valve only results in a specified re-suction pressure on the output side of the valve. For instance a re-suction pressure of Z2 mm water column can be permitted on the output side of the valve, when the valve is exposed to an under pressure of Z1 mm water column on the input side of the valve (see Figure 2).

As an example, the second criterion means that a sub-pressure $P_{F60:1}$ equivalent to e.g. Z1 mm water column on the supply piping side 35 of the valve arrangement would result in a water column of Z2 mm being re-sucked in the outfeed conduit 40. The heights Z1 and Z2 are depicted in Figure 2. The height Z1 is this example the height of the piping section 35. The height Z2 is the height of the water column being sucked up in the piping section 40 from the fluid surface 90. A large outflow of fluid at point 80 has as effect that no pressure from the fluid source tank 20 presses the fluid in piping section 35 upwards. Therefore the fluid in the piping section 35 will flow downwards due to its own weight. When the fluid flows downwards in piping section 35 a sub-pressure $P_{F60:1}$ arises in piping section 60 which leads to the siphoning effect, which wants to suck up fluid in piping section 40 from the fluid reservoir 92. This sub-pressure $P_{F60:1}$ in piping section 60 is proportional to the height Z1 in pipe section 60. The higher the height Z1 is, the more fluid is sucked up in the piping section 40 and the higher will Z2 be. Hence the second criterion for reflux preventing valves is to minimize the amount of fluid being sucked up in pipe section 40, given a certain height Z1. This can also be expressed as minimizing the height Z2, given a certain height Z1. When designing a valve either of the first and the second criterion or both the first and the second criterion have to be considered.

Position of upper ridge member

Tests have shown that the position of the upper ridge member 460 has impact on the flow of fluid. If the distance a is too large when the valve unit 130 is in the closed state, the upper ridge member 460 comes too close to the output 220 and partly blocks the output 220 and restricts the flow of fluid through the valve arrangement which is not desirable. It the distance a is shorter and the upper ridge member 460 is positioned closer to the centre of the valve plate, the fluid can flow unrestricted from the input 210, into the space inside the bore 122, continue under the upper ridge member 460 and arrive in the space inside the bore 122 on the other side of the upper ridge member 460 before entering the output 220.

The position of the ridge member 460 has also impact on the performance of the valve. As said before in the application tests indicate that by positioning the ridge member 460 so that the distance $\underline{a}$ is large the valve member 131 moves faster from the closed position (figure 9A) to the open position (figure 9B) in response to a certain pressure difference. This phenomenon is explained earlier in the application.

The ridge member 460 only separates the cavity 410 from cavity 420 when the valve member 131 extends across at least the breadth of the channel 105. If the valve member 131 has an extension which is smaller than the breadth of the channel 105, fluid would be able to pass on the sides of the valve member 131 from the cavity 420 to the cavity 410 when the valve unit 130 is in the open state.

If the minimum pressure level $P_{F60:1}$ during normal condition in the pipe section 60 is low there is a risk that the valve opens up spontaneously and that fluid leaks out. This is due to the fact the pressure level $P_{F60:1}$ fluctuates and temporarily can be lower than the atmospheric pressure level $P_{A60:1}$. In this case it can happen that the weight of the valve member 131 cannot compensate for the pressure difference and the valve unit 130 opens up. By positioning the ridge member 460 asymmetrically and letting the distance $\underline{a}$ be larger, this problem can be solved.

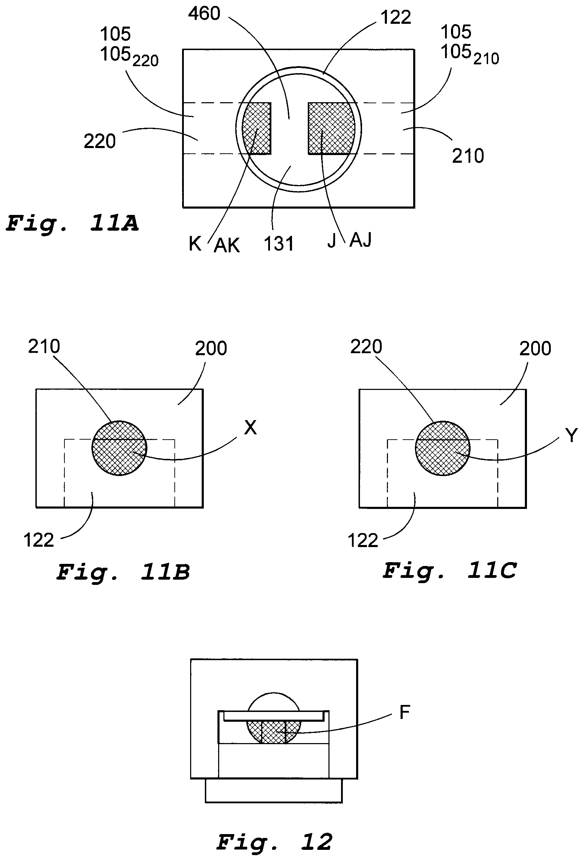

The valve member 131 has an upper valve member surface 132 facing the channel 105 and the ridge member 460, and a lower member surface 133 facing the valve seat 241 (see figure 10B). Figure 11A shows the valve housing 200 seen from below and figure 11B shows the valve housing seen from the input side. The input surface area AJ is the area of an input portion J of the upper valve member surface 132 that faces the cavity 410 and the output surface area AK is the area of an output portion K of the upper valve member surface 132 that faces the cavity 420, when the valve unit 130 is in the open position. The area AJ can e.g. be 90 mm$^2$ and the area AK can e.g. be 18 mm$^2$. During normal condition, when the valve unit 130 is in the closed position, the pressure in the channel 105 facing the input 210 will be higher than the pressure in the channel 105 facing the output 220. This is due to the fact that the ridge member 460 partly stops the flow of fluid flowing from the input 210 to the output 220. By making the input surface area AJ larger than the output surface area AK, the pressure in the channel 105 on the input side of the ridge member 460 acts on a larger area of the valve member 131 than the pressure in the channel 105 on the output side of the ridge member 460, which results in that the force that acts on the valve member 131 in order to close the valve member 131 will be larger.

The input cross section area X is the cross section area of the input 210 (see Figure 11B) and the output cross section area Y is the cross section area of the output 220 (see Figure 11C). Tests have verified that an optimal position of the upper ridge member 460 is achieved when the following conditions are fulfilled:

1. the output surface area AK is larger than the smaller of the input cross section area X of the input 210 and the output cross section area Y of the output 220.

2. the input surface area AJ is larger than the output surface area AK.

The first condition makes sure that the fluid flow criterion is satisfied, since it prevents the distance a from getting too large. The second condition makes sure that the valve member 131 moves faster from the closed position to the open position in response to a certain pressure difference and that the valve member 131 doesn't open at low pressures.

Tests have also shown that the height of the upper ridge member has impact on the performance of the valve arrangement 70. If the height M of the upper ridge member 460 as shown in figure 10E is large, the flow of fluid will be restricted by the upper ridge member 460 when the valve unit 130 is closed. Consequently the height M cannot be arbitrary large.

The height of the upper ridge member.

The height M of the upper ridge member 460 has also impact on the capacity to prevent re-suction on the output side of the valve arrangement 70. As described under Figure 3 a bush 170 is fixed and connected sealingly to the wall of the bore 122 so that the bush 170 will have a transit channel 180. This bush 170 can also be an integrated part of the housing 200, in which case the bore 122 forms the transit channel 180. When the valve unit 130 is in the second state and the valve member 131 rests against the ridge member 460 a second fluid passage 375 is created for air flowing from the outer environment into the fluid outfeed conduit (74, 40). The second fluid passage 375 comprises a first passage part 376 in a part of the bore 122 which is not intersected by the channel 105, a third passage part 378 in a part of the channel 105 which part is not intersected by the bore 122, and a second passage part 377 between the first passage part 376 and the third passage part 378 in the part of the channel 105 which is intersected by the bore 122 (see Figure 10C).

The first passage part 376 has a direction which is parallel to the direction of the bore 122. The third passage 378 has a direction which is parallel to the direction of the channel 105. The cross section area of the third passage part 378 is equal to the input cross section area X.

When the valve unit 130 is in the open state, air flows from the outer environment into the first passage part 376. The air flow then deflects in the second passage part 377, continues through the third passage part 378 on the input side of the channel 105 and arrives in the fluid outfeed conduit (74, 40). When the air flows from the second passage part 377 into the third passage part 378, the valve member 131 restricts the flow of air from the second passage part 377 into the third passage part 378. The anti-siphoning inlet 380 is the opening through which air can flow from the second passage part 377 into the third passage part 378 on the input 210 side of the channel 105 when the valve unit 130 is in the open state (see Figure 10C). This alternative of the valve member 131 restricts the upper part of the anti-siphoning inlet 380. If the height M of the upper ridge member 460 is large, the valve member 131 will restrict the anti-siphoning inlet 380 even more. This is best seen in Figure 12. The anti-siphoning inlet area F is the area of the anti-siphoning inlet 380. The anti-siphoning inlet area F is restricted by an edge of the second valve member surface 133 and by an inner wall of the input 210. If the height M of the upper ridge member 460 is large, the anti-siphoning inlet area F will be small and vice versa.

Generally the performance of the valve arrangement increases when the anti-siphoning inlet area F decreases. The smaller the anti-siphoning inlet area F is, the less is the reflux of fluid due to the pressure drop in the fluid distribution piping system. This is due to the fact that the speed of the air flowing out through the anti-siphoning inlet 380 increases when the anti-siphoning inlet area F is small.

The intense flow of air sweeps out air from the cavity 410. This decreases the pressure in the cavity 410, which sucks the valve member 131 even harder towards the upper ridge member 460. Hence, the performance of the valve arrangement 70 increases when the height M increases.

If the anti-siphoning inlet area F is set to 0, i.e. the height M of the upper ridge member 460 is large, no air from the outer environment can be sucked into the supply piping system 35. There will always be a small play 355 between the valve member 131 and the bore 122 (see figure 10D) so that the valve member 131 can move freely within the bore 122. This play 355 has the effect that the sub-pressure on the input 210 side continues over to the output 220 side, which leads to a re-suction of the fluid in the output 220 side and the valve arrangement 70 would not work. Therefore the anti-siphoning inlet area F must be larger than zero, so that air can enter.

A large anti-siphoning inlet area F in combination with a large transit channel 180 lead to a considerable air flow into the supply piping system 35 when the valve unit 130 is in the open position. Thus the sub-pressure in the supply piping system 35 will increase, which prevents re-suction in other installations in this part of the piping system.

G1 is the smallest cross section area of the first passage part 376 and G2 is the smallest cross section area of the second passage part 377. An area relation K1 is the ratio between the smaller of the limiting first passage cross section area G2 and the limiting second passage cross section area G1, and the anti-siphoning inlet area F. This can be expressed as:

$$K1 = G1/F \text{ when } G2 > G1 \text{ and } K2 = G2/F \text{ when } G1 > G2. \quad (i)$$

Tests have proven that an optimal performance is obtained when the following two conditions are fulfilled:

3. The area relation K1 > 2.

4. The anti-siphoning inlet area F > 0.

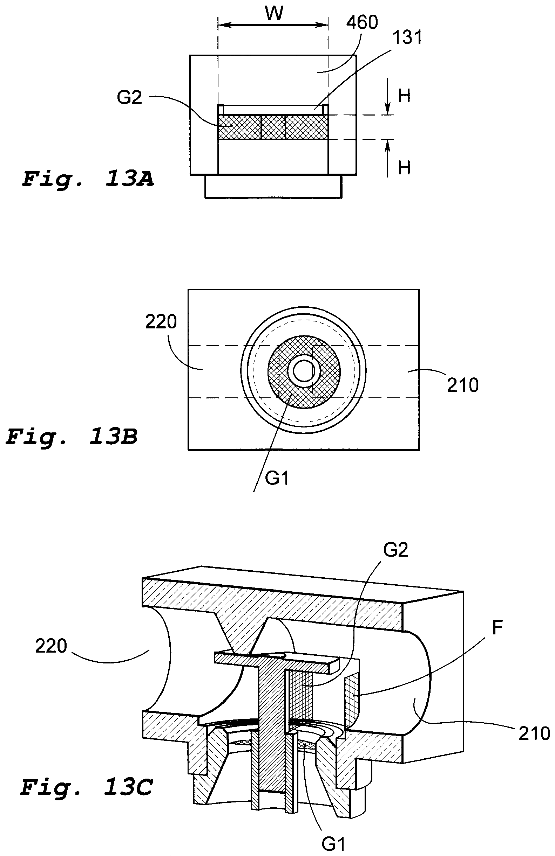

In this alternative the limiting first passage cross section area G1 is the smallest horizontal cross section area of the transit channel 180 minus a cross section area of the central shaft 150 (See Figure 13B and 13C). The limiting second passage cross section area G2 is defined by H * W where W is the width of the bore 122 and H is the distance between the valve seat 241 and the lower surface 133 of the valve member 131 when the valve unit 130 is in the second state (see Figure 13A and 13C). The limiting second passage cross section area G2 will be larger than the limiting first passage cross section area G1 when H is large and the limiting first passage cross section area G1 will be larger than the limiting second passage cross section area G2 when H is small. Consequently, the expression (i) can be re-written as:

$$K1 = G1/F \text{ when } H \text{ is large and } K1 = G2/F \text{ when } H \text{ is small.}$$

H is small when the height M of the upper ridge member 460 is large and H is large when the height M of the upper ridge member 460 is low.

The tests have revealed that a valve arrangement according to this alternative, which fulfils the conditions 1-4 here above, generate a re-suction pressure less than 200 mm water column on the output side of the valve, when the valve is exposed to an under pressure of 5000 mm water column on the input side of the valve. A fluid flow of 0,35 litres at a pressure drop of 0,15 bar over the valve is also obtained for a DN 15 valve having an inner diameter of about 12-16 mm. Tests on valves similar to the one illustrated in figure 3 shows that a re-suction pressure on the output side of the valve reaches 1200 mm water column, when the valve is exposed to an under pressure of 5000 mm water column on the input side of the valve. Hence the performance is substantially improved.

The present invention is not limited to the shown alternatives. It is not necessary to provide the valve member 131 with a central shaft 150 extending downwards. The shaft could e.g. be directed upwards instead. The shaft can be omitted or other guiding possibilities are possible, e.g. guiding in the wall of the bore 122. The movement of the valve member 131 could be actuated by other means, like e.g. a spring.

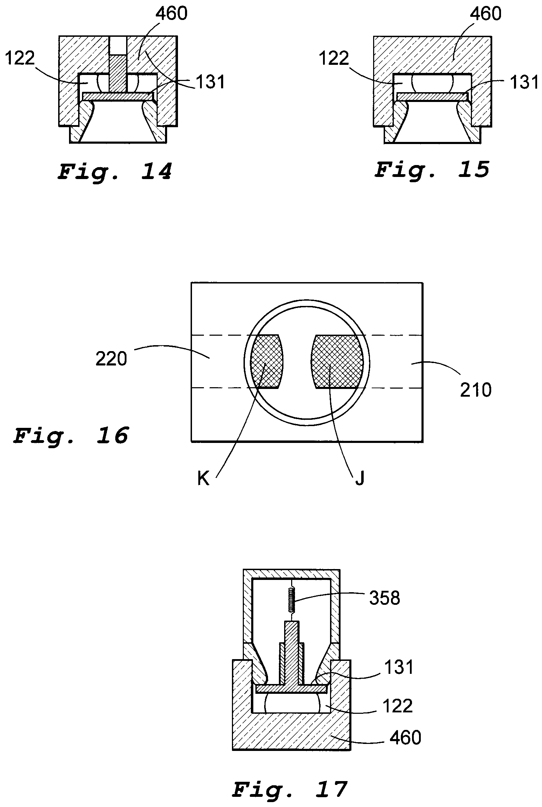

The valve member 131 according to the described alternatives is forced upwards by the pressure below the valve member 131 and it is pressed downwards by the pressure above the valve member 131 and by the weight of the valve member 131. Figure 14 shows the principles of a valve plate 131 with the central shaft pointing upwards. The valve member 131 according to this alternative is forced upwards by the pressure below the valve plate 131 and it is pressed downwards by the pressure above the valve plate 131 and by the weight of the valve member 131.

Figure 15 shows the principles of a valve plate 131 without any central shaft. The valve member 131 according to this alternative is forced upwards by the pressure below the valve plate 131 and it is pressed downwards by the pressure above the valve plate 131 and by the weight of the valve member 131.

The form of the upper ridge member 460 can vary depending on the manufacturing procedure. In figures 10A and 10B the sidewalls of the upper ridge member 460 are bent inwards. However, the sidewalls of the upper ridge member 460 can be vertical as in figures 8A and 8C. The sides can also be curved like in figure 16.

In the shown alternatives the form of the cross section of the channel 105 and of the bore 122 is circular. Principally the cross section of the channel 105 and the bore 122 can have any form such as e.g. square.

In the shown alternatives the form of the valve member 131 is circular. Principally the valve member 131 can have any form such as e.g. square.

The bore 122 does not have to extend from the *lower* outer surface of the housing 100 to the channel 105. Principally the bore 122 can extend from the *upper* outer surface of the housing 100 or from the *side* of the housing 100 to the channel 105. Figure 17 shows schematically the bore extending from the upper outer surface of the housing 100 to the channel 105. The valve member 131 according to this alternative is forced upwards to the closed state by the pressure below the valve plate 131 and by a spring 358 and it is pressed downwards to the open state by the pressure above the valve plate 131 and by the weight of the valve member 131. As a consequence, the upper ridge member 460 doesn't have to be positioned in the upper part of the inner surface 365 of the housing 100. The ridge member must be positioned so that the valve member can rest against the ridge member 460 in the open state of the valve unit 130. The off-centred upper ridge member 460 can be used together with an elevated first seat valve 241 or together with a lower first seat valve 140.

The invention and the preferred embodiments of the invention are provided in the appended claims.

**Claims**

1. A manually operable tap valve device (42, 45A, 45B) comprising
a first input for connection to a fluid supply piping system (35, 72) having a fluid supply pressure level (PO; PO1; P35:1), said input being suitable for reception of a first fluid; and an output opening (48) for delivery of said first fluid; wherein the manually operable tap valve device (42, 45A, 45B) includes a through-flow anti-siphoning valve arrangement (70) adapted to be mounted in an environment having an ambient pressure level (PA60); the through-flow anti-siphoning valve arrangement (70) including:
a valve housing (100, 200) having:

an anti-siphoning valve input (210);
an anti-siphoning valve output (220); and
a housing body (100, 200, 130) positioned between the anti-siphoning valve input (210) and the anti-siphoning valve output (220), said housing body having;
an inner surface forming a first channel (105) for connecting the anti-siphoning valve input (210) with the anti-siphoning valve output (220); and a valve unit (130) having;
a transit channel (180) communicating with said environment,
a first valve seat (140, 241) surrounding an entry to the transit channel (180), and a movable valve member (131) having:

a first valve member surface (132, J, K) facing the first channel (105) and
a second valve member surface (133) facing the transit channel entry and the first valve seat (140, 241), wherein the first valve member surface (132, J, K) is facing a direction opposite to the direction in which said second valve member surface (133) is facing and wherein the valve unit (130), in operation, is capable of switching between a first state and a second state dependent on a force difference (ΔF) between a first force (F1) dependent on fluid pressure (PF, PO, P410) acting on said first valve member surface (132, J, K), and a second force (F2) dependent on fluid pressure (PA) acting on said second valve member surface (133), wherein the movable valve member (131) is adapted to rest sealingly against the first valve seat (140, 241) so as to prevent said first fluid from leaving the first channel (105) when the valve unit (130) is in the first state, and wherein the through-flow anti-siphoning valve (70) is such that, when the fluid supply pressure level (PO; PO1; P35:1, PF60:1) is beneath said ambient pressure level (PA60:1) and said force difference (ΔF) exceeds a threshold value, said force difference (ΔF) causes the valve unit (130) to assume said second state such that a second fluid can flow into the first channel (105), via the transit channel (180) from the housing environment so as to prevent reflux of first fluid from said anti-siphoning output (220) towards the fluid supply piping system (35, 72); wherein the manually operable tap valve device (42, 45A, 45B) further comprises another valve seat (910), an outlet orifice (915), a second movable valve member (920), a control rod (940), a pipe (74) and a handle attachment portion (930) adapted for attachment of a handle (46) so that the manually operable tap valve device (42) can be manually operated to a closed state, in which closed state the second movable valve member (920) is forced to rest against the another valve seat (910) enclosing the outlet orifice (915); wherein said another valve seat (910) is shaped so as to enable sealingly meeting said second movable valve member (920) for controlling the flow of said first fluid through said outlet orifice (915) into the pipe (74); and wherein the second movable valve member (920) is biased towards the another valve seat (910) by the control rod (940) so as to enable control of the flow of said first fluid through said outlet orifice (915) by manual operation of the control rod (940), which control rod (940) is operable via the handle (46) wherein the manually operable tap valve device (42, 45A, 45B) comprises a first part (45A, 70) including said first input; and a second part (45B) including said output opening (48) and said handle attachment portion (930); and the first part (45A, 70) includes said through-flow anti-siphoning valve arrangement (70),

wherein said first input is said anti-siphoning valve input (210); and
the anti-siphoning valve output (220) comprises said another valve seat (910) enclosing said outlet orifice (915),

said outlet orifice (915) constituting the outlet end of the channel (105); and the anti-siphoning valve output (220) is adapted to attach said second part (45B), wherein the pipe (74) leads the first fluid to the output opening (48) of the manually operable tap valve device.

2. The manually operable tap valve device (42, 45A, 45B) according to claim 1, wherein
the housing body (100, 200) comprises a first ridge member (360, 460) which is provided in the first channel (105) positioned so as to face the first valve member surface (132, J, K); and wherein the first ridge member (360, 460) protrudes from the inner surface (365) of the first channel (105) so that it co-operates with the movable valve member (131) to form at least one cavity (410, 420) between the first valve member surface (132, J, K) and the inner surface (365) of the first channel (105) when the valve unit (130) is in its second state so that the valve member (131) rests against the first ridge member (360, 370).

3. The manually operable tap valve device (42, 45A, 45B) according to claim 2, wherein
the first ridge member (360, 460) is shaped and dimensioned to stretch across the breadth of the channel (105), and such that the first ridge member (360, 460) co-operates with the movable valve member (131) to form a first cavity (410) facing the input side (210) of the housing (100, 200); wherein
an input side portion (J) of the first valve member surface (132) faces the first cavity (410); said input side portion (J) having an input surface area (AJ).

4. The manually operable tap valve device (42, 45A, 45B) according to any of claims 2 or 3, wherein

the first ridge member (360, 460) is shaped and dimensioned such that the first ridge member (360, 460) co-operates with the movable valve member (131) to form a second cavity (420) facing the output side (220) of the valve housing (100, 200); wherein
an output side portion (K) of the first valve member surface (132) faces the second cavity (420); said output side portion (K) having an output surface area (AK).

5. The manually operable tap valve device (42, 45A, 45B) according to claim 4, wherein
said input surface area (AJ) is larger than said output surface area (AK).

6. The manually operable tap valve device (42, 45A, 45B) according to any of claims 4 or 5, wherein the first ridge member (360, 460) is positioned at a predetermined distance (a) off-centre in relation to the valve member (131) such that said input side portion (J) is larger than said output side portion (K).

7. The manually operable tap valve device (42, 45A, 45B) according to any of claims 2-6, wherein
the housing body (100, 200, 130) comprises an upper ridge member (360) which co-operates with the movable valve member (131) to separate the first cavity (410) of the first input from the second cavity (420) of the output side (220) when the second fluid pressure (PF60) becomes lower than the first ambient pressure level (PA60).

8. The manually operable tap valve device (42, 45A, 45B) according to any of claims 2-7, wherein

said another valve seat (910) and said first ridge member (360, 460) are formed by a single undivided entity; and/or
said another valve seat (910) and said first input are formed by a single undivided entity.

9. The manually operable tap valve device (42, 45A, 45B) according to any preceding claim, wherein the through-flow anti-siphoning valve arrangement (70) is a semi-manufactured valve unit (45A).

10. The manually operable tap valve device (42, 45A, 45B) according to any preceding claim, wherein
said anti-siphoning valve output (220) is adapted for functional interaction with said second part (45B).

11. The manually operable tap valve device (42, 45A, 45B) according to any preceding claim, wherein

said another valve seat (910), in operation, is a valve seat for a check valve (950), when
the second movable valve member (920) is spring biased towards the another valve seat (910) such that the fluid supply pressure level (PO; PO1; P35:1) acting on a surface of the second movable valve member facing said outlet orifice (915) generates a third force so as to urge the second movable valve member (920) away from the another valve seat (910) so as to cause the second movable valve member (920) to move away from the another valve seat (910) when said third force is greater than the biasing force of said spring.

12. The manually operable tap valve device according to any preceding claim, wherein the anti-siphoning valve output (220) further comprises:

a cylindrical threaded outlet portion enclosing said another valve seat (910) so as to enable attachment of the through-flow anti-siphoning valve arrangement (70) to the second part (45B) of the manually operable tap valve device (42, 45A, 45B) by means of the threaded outlet portion.

13. A tap water system (10, 35) for supplying water of potable quality, the tap water system comprising:
a water supply pipe (35, 72) provided in a building; and a manually operable tap valve device (42, 45A, 45B) according to any preceding claim, connected to said water supply pipe (35, 72).

**Patentansprüche**

1. Manuell betätigbare Auslassventileinrichtung (42, 45A, 45B) umfassend einen ersten Eingang zur Verbindung mit einem Fluidversorgungsleitungssystem (35, 72), das ein Fluidversorgungsdruckniveau (PO; PO1; P35:1) aufweist, welcher Eingang für die Aufnahme eines ersten Fluids geeignet ist; und eine Ausgangsöffnung (48) zur Abgabe des ersten Fluids; wobei die manuell betätigbare Auslassventileinrichtung (42, 45A, 45B) eine Durchströmungs-Anti-Siphon-Ventilanordnung (70) enthält, die dafür ausgelegt ist, in einer Umgebung mit einem Umgebungsdruckniveau (PA60) montiert zu werden; welche Durchströmungs-Anti-Siphon-Ventilanordnung (70) enthält:
ein Ventilgehäuse (100, 200) aufweisend:

einen Anti-Siphon-Ventileingang (210);
einen Anti-Siphon-Ventilausgang (220); und
einen zwischen dem Anti-Siphon-Ventileingang (210) und dem Anti-Siphon-Ventilausgang (220) angeordneten Gehäusekörper (100, 200, 130), wobei der Gehäusekörper aufweist;
eine Innenfläche, welche einen ersten Kanal (105) zur Verbindung des Anti-Siphon-Ventileingangs (210) mit dem Anti-Siphon-Ventilausgang (220) bildet; und eine Ventileinheit (130) aufweisend;
einen mit der Umgebung kommunizierenden Durchgangskanal (180),
einen einen Eintritt in den Durchgangskanal (180) umgebenden ersten Ventilsitz (140, 241) und ein bewegliches Ventilelement (131) aufweisend:

eine dem ersten Kanal (105) zugewandte erste Ventilelementoberfläche (132, J, K) und
eine dem Durchgangskanaleintritt und dem ersten Ventilsitz (140, 241) zugewandte zweite Ventilelementoberfläche (133), wobei die erste Ventilelementoberfläche (132, J, K) einer Richtung zugewandt ist, die der Richtung, in der die zweite Ventilelementoberfläche (133) zugewandt ist, entgegengesetzt ist, und wobei im Betrieb die Ventileinheit (130) in der Lage ist, zwischen einem ersten Zustand und einem zweiten Zustand umzuschalten, abhängig von einer Kraftdifferenz (ΔF) zwischen einer ersten Kraft (F1), die von einem auf die erste Ventilelementoberfläche (132, J, K) einwirkenden Fluiddruck (PF, PO, P410) abhängt, und einer zweiten Kraft (F2) die von einem auf die zweite Ventilelementoberfläche (133) einwirkenden Fluiddruck (PA) abhängt, wobei
das bewegliche Ventilelement (131) angepasst ist, um gegen den ersten Ventilsitz (140, 241) dichtend anzuliegen, so dass verhindert wird, dass das erste Fluid den ersten Kanal (105) verlässt, wenn sich die Ventileinheit (130) in dem ersten Zustand befindet; und wobei
das Durchströmungs-Anti-Siphon-Ventil (70) so ausgelegt ist, dass, wenn das Fluidversorgungsdruckniveau (PO; PO1; P35:1, PF60:1) unter dem Umgebungsdruckniveau (PA60:1) liegt, und die Kraftdifferenz (ΔF) einen Schwellenwert überschreitet, die Kraftdifferenz (ΔF) bewirkt, dass die zweite Ventileinheit (130) den zweiten Zustand annimmt, so dass das zweite Fluid in den ersten Kanal (105), über den Durchgangskanal (180) von der Gehäuseumgebung, hineinfließen kann, um einen Rückfluss des ersten Fluids von dem Anti-Siphon-Ausgang (220) zum Fluidversorgungsleitungssystem (35, 72) hin zu verhindern; wobei die manuell betätigbare Auslassventileinrichtung (42, 45A, 45B) ferner einen anderen Ventilsitz (910), eine Abgangsöffnung (915), ein zweites bewegliches Ventilelement (920), eine Steuerstange (940), eine Leitung (74) und einen Griffbefestigungsteil (930) umfasst, der für die Befestigung eines Griffs (46) angepasst ist, so dass die manuell betätigbare Auslassventileinrichtung (42) in einen geschlossenen Zustand manuell betätigbar ist, in welchem geschlossenen Zustand das zweite bewegliche Ventilelement (920) zur Anlage an dem anderen Ventilsitz (910) angetrieben wird, welcher die Abgangsöffnung (915) umschließt; wobei der andere Ventilsitz (910) so ausgestaltet ist, dass er ein abdichtendes Zusammentreffen des zweiten beweglichen Ventilelements (920) zum Steuern der Strömung des ersten Fluids durch die Abgangsöffnung (915) in die Leitung (74) ermöglicht; und wobei das zweite bewegliche Ventilelement (920) gegen den anderen Ventilsitz (910) durch die Steuerstange (940) vorgespannt ist, um die Steuerung der Strömung des ersten Fluids durch die Abgangsöffnung (915) durch manuellen Betrieb der Steuerstange (940) zu ermöglichen, welche Steuerstange (940) mittels des Griffs (46) betätigbar ist, wobei
die manuell betätigbare Auslassventileinrichtung (42, 45A, 45B) einen ersten Teil (45A, 70) mit dem ersten Eingang; und einen zweiten Teil (45B) mit der Ausgangsöffnung (48) und dem Griffbefestigungsteil (930) umfasst; und der erste Teil (45A, 70) die Durchströmungs-Anti-Siphon-Ventilanordnung (70) enthält,
wobei der erste Ausgang der Anti-Siphon-Ventileingang (210) ist; und
der Anti-Siphon-Ventilausgang (220) den die Abgangsöffnung (915) umschließenden anderen Ventilsitz (910) umfasst,
die Abgangsöffnung (915) das Ausgangsende des Kanals (105) bildet;
und der Anti-Siphon-Ventilausgang (220) zur Befestigung des zweiten Teils (45B) angepasst ist, wobei die Leitung (74) das erste Fluid zur Ausgangsöffnung (48) der manuell betätigbaren Auslassventileinrichtung führt.

2. Manuell betätigbare Auslassventileinrichtung (42, 45A, 45B) nach Anspruch 1, wobei
der Gehäusekörper (100, 200) ein erstes Stegelement (360, 460) umfasst, das in dem ersten Kanal (105) vorgesehen ist, der so angeordnet ist, dass er der ersten Ventilelementoberfläche (132, J, K) zugewandt ist; und wobei das erste Stegelement (360, 460) aus der Innenfläche (365) des ersten Kanals (105) herausragt, so dass es mit dem beweglichen Ventilelement (131) zusammenwirkt, um mindestens einen Hohlraum (410, 420) zwischen der ersten Ventilelementoberfläche (132, J, K) und der Innenfläche (365) des ersten Kanals (105) zu bilden, wenn sich die Ventileinheit (130) in ihrem zweiten Zustand befindet, so dass das Ventilelement (131) an dem ersten Stegelement (360, 370) anliegt.

3. Manuell betätigbare Auslassventileinrichtung (42, 45A, 45B) nach Anspruch 2, wobei
das erste Stegelement (360, 460) geformt und dimensioniert ist, so dass es sich über die Breite des Kanals (105) erstreckt, und derart, dass das erste Stegelement (360, 460) mit dem beweglichen Ventilelement (131) zusammenwirkt, um einen ersten Hohlraum (410) zu bilden, welcher der Eingangsseite (210) des Gehäuses (100, 200) zugewandt ist; wobei
ein Eingangsseitenteil (J) der ersten Ventilelementoberfläche (132) dem ersten Hohlraum (410) zugewandt ist; welcher Eingangsseitenteil (J) einen Eingangsoberflächenbereich (AJ) aufweist.

4. Manuell betätigbare Auslassventileinrichtung (42, 45A, 45B) nach Anspruch 2 oder 3, wobei
das erste Stegelement (360, 460) geformt und dimensioniert ist, dass das erste Stegelement (360, 460) mit dem beweglichen Ventilelement (131) zusammenwirkt, um einen zweiten Hohlraum (420) zu bilden, welcher der Ausgangsseite (220) des Ventilgehäuses (100, 200) zugewandt ist; wobei
ein Ausgangsseitenteil (K) der ersten Ventilelementoberfläche (132) dem zweiten Hohlraum (420) zugewandt ist; welcher Ausgangsseitenteil (K) einen Ausgangsoberflächenbereich (AK) aufweist.

5. Manuell betätigbare Auslassventileinrichtung (42, 45A, 45B) nach Anspruch 4, wobei
der Eingangsoberflächenbereich (AJ) größer als der Ausgangsoberflächenbereich (AK) ist.

6. Manuell betätigbare Auslassventileinrichtung (42, 45A, 45B) nach Anspruch 4 oder 5, wobei das erste Stegelement (360, 460) in einem vorbestimmten Abstand (a) außermittig in Bezug auf das Ventilelement (131) angeordnet ist, so dass der Eingangsseitenteil (J) größer als der Ausgangseitenteil (K) ist.

7. Manuell betätigbare Auslassventileinrichtung (42, 45A, 45B) nach einem der Ansprüche 2 bis 6, wobei
der Gehäusekörper (100, 200, 130) ein oberes Stegelement (360) umfasst, das mit dem beweglichen Ventilelement (131) zusammenwirkt, um den ersten Hohlraum (410) des ersten Eingangs vom zweiten Hohlraum (420) der Ausgangsseite (220) zu trennen, wenn der zweite Fluiddruck (PF60) niedriger als das erste Umgebungsdruckniveau (PA60) wird.

8. Manuell betätigbare Auslassventileinrichtung (42, 45A, 45B) nach einem der Ansprüche 2 bis 7, wobei
der andere Ventilsitz (910) und das erste Stegelement (360, 460) durch eine einzige ungeteilte Einheit gebildet sind; und/oder
der andere Ventilsitz (910) und der erste Eingang durch eine einzige ungeteilte Einheit gebildet sind.

9. Manuell betätige Auslassventileinrichtung (42, 45A, 45B) nach einem der vorhergehenden Ansprüche, wobei die Durchströmungs-Anti-Siphon-Ventilanordnung (70) eine halbfertige Ventileinheit (45A) ist.

10. Manuell betätigbare Auslassventileinrichtung (42, 45A, 45B) nach einem der vorhergehenden Ansprüche, wobei der Anti-Siphon-Ventilausgang (220) für eine funktionelle Wechselwirkung mit dem zweiten Teil (45B) angepasst ist.

11. Manuell betätigbare Auslassventileinrichtung (42, 45A, 45B) nach einem der vorhergehenden Ansprüche, wobei im Betrieb der andere Ventilsitz (910) ein Ventilsitz für ein Rückschlagventil (950) ist, wenn
das zweite bewegliche Ventilelement (920) in Richtung des anderen Ventilsitzes (910) federgespannt ist, derart, dass das Fluidversorgungsdruckniveau (PO; PO1; P35:1), das auf eine Oberfläche des zweiten beweglichen Ventilelements wirkt, die der Abgangsöffnung (915) zugewandt ist, eine dritte Kraft erzeugt, um das zweite bewegliche Ventilelement (920) von dem anderen Ventilsitz (910) weg anzutreiben, um zu bewirken, dass sich das zweite bewegliche Ventilelement (920) von dem anderen Ventilsitz (910) wegbewegt, wenn die dritte Kraft größer als die Vorspannkraft der Feder ist.

12. Manuell betätigbare Auslassventileinrichtung nach einem der vorhergehenden Ansprüche, wobei der Anti-Siphon-Ventilausgang (220) ferner umfasst:
einen zylindrischen Gewindeauslassabschnitt, der den anderen Ventilsitz (910) umschließt, um die Befestigung der Durchströmungs-Anti-Siphon-Ventilanordnung (70) an dem zweiten Teil (45B) der manuell betätigbaren Auslassventileinrichtung (42, 45A, 45B) mittels des Gewindeauslassabschnitts zu ermöglichen.

13. Auslasswassersystem (10, 35) zur Versorgung von Wasser trinkbarer Qualität, wobei das Auslasswassersystem Folgendes umfasst:
eine in einem Gebäude vorgesehene Wasserversorgungsleitung (35, 72); und eine manuell betätigbare Auslassventileinrichtung (42, 45A, 45B) nach einem der vorhergehenden Ansprüche, die mit der Wasserversorgungsleitung (35, 72) verbunden ist.

## Revendications

1. Dispositif de robinet à commande manuelle (42, 45A, 45B) comprenant une première entrée pour le raccordement avec un système de tuyauterie d'alimentation en fluide (35, 72) ayant un niveau de pression d'alimentation en fluide (PO; PO1; P35:1), ladite entrée étant appropriée pour la réception d'un premier fluide ; et une ouverture de sortie (48) pour la livraison dudit premier fluide; dans lequel le dispositif de robinet à commande manuelle (42, 45A, 45B) comprend un dispositif de soupape anti-siphonnage à passage traversant (70) adapté pour être monté dans un environnement ayant un niveau de pression ambiante (PA60); le dispositif de soupape anti-siphonnage à passage traversant (70)
comprenant :

un boîtier de soupape (100, 200) ayant
une entrée de soupape anti-siphonnage (210) ;
une sortie de soupape anti-siphonnage (220) ; et
un corps de boîtier (100, 200, 130) placé entre l'entrée de soupape anti-siphonnage (210) et la sortie de soupape anti-siphonnage (220), ledit corps de boîtier ayant ;
une surface intérieure formant un premier canal (105) pour raccorder l'entrée de soupape anti-siphonnage (210) à la sortie de soupape anti-siphonnage (220) ; et une unité de soupape (130) ayant ;
un canal de transit (180) communiquant avec ledit environnement,
un premier siège de soupape (140, 241) entourant une entrée vers le canal de transit (180), et un élément de soupape mobile (131) ayant :

une première surface d'élément de soupape (132, J, K) faisant face au premier canal (105) et
et une deuxième surface d'élément de soupape (133) faisant face à l'entrée du canal de transit et au premier siège de soupape (140, 241), dans lequel la première surface d'élément de soupape (132, J, K) fait face à une direction opposée à la direction dans laquelle la deuxième surface d'élément de soupape (133) fait face, et dans lequel l'unité de soupape (130), en fonctionnement, est capable de commuter entre un premier état et un deuxième état en fonction d'une différence de force ($\Delta$F) entre une première force (F1) en fonction de la pression du fluide (PF, PO, P410) agissant sur ladite première surface de l'élément de soupape (132, J, K), et une deuxième force (F2) en fonction de la pression du fluide (PA) agissant sur ladite deuxième

23

surface d'élément de soupape (133), dans lequel

l'élément de soupape mobile (131) est adapté de manière à reposer de manière étanche contre un premier siège de soupape (140, 241) de manière à empêcher ledit premier fluide de quitter le premier canal (105) lorsque l'unité de soupape (130) est dans le premier état, et dans lequel

la soupape anti-siphonnage à passage traversant (70) est telle que, lorsque le niveau de pression d'alimentation en fluide (PO; PO1; P35:1, PF60:1) est en dessous dudit niveau de pression ambiante (PA60:1) et ladite différence de force (ΔF) dépasse une valeur de seuil, ladite différence de force (ΔF) amène l'unité de soupape (130) à assumer ledit deuxième état si bien qu'un deuxième fluide peut s'écouler dans le premier canal (105) via le canal de transit (180) depuis l'environnement du boîtier de manière à empêcher le reflux du premier fluide depuis ladite sortie anti-siphonnage (220) vers le système de tuyauterie d'alimentation en fluide (35, 72) ; dans lequel le dispositif de robinet à commande manuelle (42, 45A, 45B) comprend en outre un autre siège de soupape (910), un orifice de sortie (915), un deuxième élément de soupape mobile (920), une tige de commande (940), un tuyau (74) et une partie de fixation de poignet (930) adapté pour l'attachement d'un poignet (46) si bien le dispositif de robinet à commande manuelle (42) peut être commandé manuellement dans un état fermé, état fermé dans lequel le deuxième élément de soupape mobile (920) est forcé de rester contre l'autre siège de soupape (910) enfermant l'orifice de sortie (915) ; dans lequel l'autre siège de soupape (910) est formé de manière à permettre de rencontrer de manière étanche le deuxième élément de soupape mobile (920) pour commander l'écoulement dudit premier fluide à travers ledit orifice de sortie (915) dans le tuyau (74) ; et dans lequel le deuxième élément de soupape mobile (920) est sollicité vers l'autre siège de soupape (910) par la tige de commande (940) pour permettre la commande de l'écoulement dudit premier fluide à travers ledit orifice de sortie (915) par la commande manuelle de la tige de commande (940), ladite tige de commande (940) pouvant fonctionner via le poignet (46) dans lequel le dispositif de robinet à commande manuelle (42, 45A, 45B) comprend une première partie (45A, 70) comprenant ladite première sortie ; et une deuxième partie (45B) comprenant ladite ouverture de sortie (48) et ladite partie de fixation de poignet (930); et la première partie (45A, 70) comprenant ledit dispositif de soupape anti-siphonnage à passage traversant (70),

dans lequel ladite première entrée est ladite entrée de soupape anti-siphonnage (210) ; et

la sortie de soupape anti-siphonnage (220) comprend ledit autre siège de soupape (910) enferment ledit orifice de sortie (915),

ledit orifice de sortie (915) constituant l'extrémité de sortie du canal (105) ;

et la sortie de soupape anti-siphonnage (220) est adaptée pour attacher ladite deuxième partie (45B), le tuyau (74) guidant le premier fluide vers l'ouverture de sortie (48) du dispositif de robinet à commande manuelle.

2. Dispositif de robinet à commande manuelle (42, 45A, 45B) selon la revendication 1, dans lequel

le corps de boîtier (100, 200) comprend un premier élément de nervure (360, 460) qui est pourvu dans le premier canal (105) positionné pour faire face à la première surface de l'élément de soupape (132, J, K) ; et dans lequel le premier élément de nervure (360, 460) fait saillie depuis la surface intérieure (365) du premier canal (105) si bien qu'elle coopère avec l'élément de soupape mobile (131) pour former au moins une cavité (410, 420) entre la première surface d'élément de soupape (132, J, K) et la surface intérieure (365) du premier canal (105) lorsque l'unité de soupape (130) est dans son deuxième état de sorte que l'élément de soupape (131) repose contre le premier élément de nervure (360, 370).

3. Dispositif de robinet à commande manuelle (42, 45A, 45B) selon la revendication 2, dans lequel

le premier élément de nervure (360, 460) est formé et dimensionné pour s'étirer sur toute la largeur du canal (105), et si bien que le premier élément de nervure (360, 460) coopère avec l'élément de soupape mobile (131) pour former une première cavité (410) faisant face au côté d'entrée (210) du boîtier (100, 200) ; dans lequel une partie latérale d'entrée (J) de la première surface d'élément de soupape (132) fait face à la première cavité (410) ; ladite partie latérale d'entrée (J) ayant une zone de surface d'entrée (AJ).

4. Dispositif de robinet à commande manuelle (42, 45A, 45B) selon l'une quelconque des revendications 2 ou 3, dans lequel

le premier élément de nervure (360, 460) est formé et dimensionné si bien que le premier élément de nervure (360, 460) coopère avec l'élément de soupape mobile (131) pour former une deuxième cavité (420) faisant face au côté de sortie (220) du boîtier de soupape (100, 200) ; dans lequel

une partie latérale de sortie (K) de la première surface d'élément de soupape (132) fait face à la deuxième cavité (420) ; ladite partie latérale de sortie (K) ayant une zone de surface de sortie (AK).

**5.** Dispositif de robinet à commande manuelle (42, 45A, 45B) selon la revendication 4, dans lequel ladite zone de surface d'entrée (AJ) est supérieure à ladite zone de surface de sortie (AK).

**6.** Dispositif de robinet à commande manuelle (42, 45A, 45B) selon l'une quelconque des revendications 4 ou 5, dans lequel le premier élément de nervure (360, 460) est positionné à une distance prédéterminée (a) excentrée par rapport à l'élément de soupape (131) si bien que ladite partie latérale d'entrée (J) est supérieure à ladite partie latérale de sortie (K).

**7.** Dispositif de robinet à commande manuelle (42, 45A, 45B) selon l'une quelconque des revendications 2 à 6, dans lequel
le corps de boîtier (100, 200, 130) comprend un élément de nervure supérieur (360) qui coopère avec l'élément de soupape mobile (131) pour séparer la première cavité (410) de la première entrée de la deuxième cavité (420) du côté sortie (220) lorsque la deuxième pression de fluide (PF60) devient inférieure au premier niveau de pression ambiante (PA60).

**8.** Dispositif de robinet à commande manuelle (42, 45A, 45B) selon l'une quelconque des revendications 2 à 7, dans lequel
ledit autre siège de soupape (910) et ledit premier élément de nervure (360, 460) sont formés par une seule entité non divisée ; et / ou
ledit autre siège de soupape (910) et ladite première entrée sont formés par une seule entité indivisée.

**9.** Dispositif de robinet à commande manuelle (42, 45A, 45B) selon l'une quelconque des revendications précédentes, dans lequel le dispositif de soupape anti-siphonnage à passage traversant (70) est une unité de soupape semi-fabriquée (45A).

**10.** Dispositif de robinet à commande manuelle (42, 45A, 45B) selon l'une quelconque des revendications précédentes, dans lequel
ladite sortie de soupape anti-siphonnage (220) est adaptée pour une interaction fonctionnelle avec ladite deuxième partie (45B).

**11.** Dispositif de robinet à commande manuelle (42, 45A, 45B) selon l'une quelconque des revendications précédentes, dans lequel
ledit autre siège de soupape (910), en fonctionnement, est un siège de soupape pour un clapet anti-retour (950), lorsque
lorsque le deuxième élément de soupape mobile (920) est sollicité par ressort vers l'autre siège de soupape (910) si bien que le niveau de pression d'alimentation en fluide (PO; PO1; P35:1) agissant sur une surface du deuxième élément de soupape mobile faisant face audit orifice de sortie (915) génère une troisième force de manière à solliciter le deuxième élément de soupape mobile (920) à l'écart de l'autre siège de soupape (910) de manière à éloigner le deuxième élément de soupape mobile (920) de l'autre siège de soupape (910) lorsque ladite troisième force est supérieure à la force de sollicitation dudit ressort.

**12.** Dispositif de robinet à commande manuelle selon l'une quelconque des revendications précédentes, dans lequel la sortie de soupape anti-siphonnage (220) comprend en outre :
une partie de sortie filetée cylindrique enfermant ledit autre siège de soupape (910) de manière à permettre la fixation du dispositif de soupape anti-siphonnage à passage traversant (70) à la deuxième partie (45B) du dispositif de robinet à commande manuelle (42, 45A 45B) au moyen de la partie de sortie filetée.

**13.** Système d'eau du robinet (10, 35) pour fournir de l'eau de qualité potable, le système d'eau du robinet comprenant :
un tuyau d'alimentation en eau (35, 72) prévu dans un bâtiment ; et un dispositif de robinet à commande manuelle (42, 45A 45B) selon l'une quelconque des revendications précédentes, raccordé audit tuyau d'alimentation en eau (35, 72).

*Fig. 1*

Fig. 2A

Fig. 2B

Fig. 2C

**Fig. 2AA**

950
45

910

915

980

940

109

970

110

920

**Fig. 2BB**

950
45

915

105

980

970

210

920

910

131

$X_1 \longrightarrow$

$\longleftarrow X_2$

**Fig. 2CC**

45, 950

131

200

980

970

210

920

105
915

105

Fig. 3A

Fig. 3B

*Fig. 4A*

*Fig. 4B*

*Fig. 4C*

*Fig. 4D*

*Fig. 4E*

*Fig. 4F*

**Fig. 5A**

**Fig. 5B**

**Fig. 5C**

**Fig. 5D**

**Fig. 5E**

**Fig. 5F**

*Fig. 6A*

*Fig. 6B*

*Fig. 6C*

*Fig. 6D*

*Fig. 6E*

*Fig. 6F*

Fig. 7A

Fig. 7B

Fig. 7C

Fig. 7D

Fig. 7E

Fig. 7F

*Fig. 8B*

*Fig. 8D*

*Fig. 8A*

*Fig. 8C*

Fig. 9A

Fig. 9B

Fig. 9C

Fig. 9D

Fig. 9E

Fig. 9F

**Fig. 10A**

**Fig. 10B**

**Fig. 10C**

**Fig. 10D**

**Fig. 10E**

**Fig. 10F**

Fig. 11A

Fig. 11B

Fig. 11C

Fig. 12

*Fig. 13A*

*Fig. 13B*

*Fig. 13C*

460

122

131

**Fig. 14**

460

122

131

**Fig. 15**

220

210

K          J

**Fig. 16**

358

131

122

460

**Fig. 17**

**EP 2 828 564 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 1602193 A
- US 5129416 A
- US 5012833 A
- US 6386223 B
- DE 202010014936 U
- EP 1375988 A